(19) **Europäisches Patentamt / European Patent Office / Office européen des brevets**

(11) **EP 2 544 354 B1**

(12) **EUROPEAN PATENT SPECIFICATION**

(45) Date of publication and mention of the grant of the patent:
**06.03.2019 Bulletin 2019/10**

(51) Int Cl.:
*H02M 7/525* (2006.01)  *H02M 1/42* (2007.01)
*H02M 3/158* (2006.01)  *H02M 7/539* (2006.01)

(21) Application number: **12172429.8**

(22) Date of filing: **18.06.2012**

(54) **Power converter circuit with AC output**

Stromwandlerschaltung mit Wechselstromausgabe

Circuit convertisseur de puissance à sortie CA

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.07.2011 US 201113178730**

(43) Date of publication of application:
**09.01.2013 Bulletin 2013/02**

(73) Proprietor: **Infineon Technologies AG**
**85579 Neubiberg (DE)**

(72) Inventors:
- **Deboy, Gerald**
  **9061 Klagenfurt (AT)**
- **Bründlinger, Roland**
  **2000 Stockerau (AT)**
- **Andrén, Filip**
  **1100 Wien (AT)**
- **Lehfuß, Felix**
  **3021 Pressbaum (AT)**

(74) Representative: **Westphal, Mussgnug & Partner Patentanwälte mbB**
**Werinherstrasse 79**
**81541 München (DE)**

(56) References cited:
EP-A2- 0 216 263      CN-A- 102 035 416
JP-A- H1 084 633      JP-A- H10 304 572
JP-A- 2000 069 671   JP-A- 2010 279 133
US-A1- 2005 226 017

- **ALONSO O ET AL: "Cascaded h-bridge multilevel converter for grid connected photovoltaic generators with independent maximum power point tracking of each solar array", PESC'03. 2003 IEEE 34TH. ANNUAL POWER ELECTRONICS SPECIALISTS CONFERENCE. CONFERENCE PROCEEDINGS. ACAPULCO, MEXICO, JUNE 15 - 19, 2003; [ANNUAL POWER ELECTRONICS SPECIALISTS CONFERENCE], NEW YORK, NY :; IEEE, US, vol. 2, 15 June 2003 (2003-06-15), pages 731-735, XP010648900, DOI: 10.1109/PESC.2003.1218146 ISBN: 978-0-7803-7754-7**
- **WALKER G R ET AL: "Cascaded DC-DC converter connection of photovoltaic modules", POWER ELECTRONICS SPECIALISTS CONFERENCE; [ANNUAL POWER ELECTRONICS SPECIALISTS CONFERENCE],, vol. 1, 23 June 2002 (2002-06-23), pages 24-29, XP010596060, ISBN: 978-0-7803-7262-7**

**Description**

Embodiments of the present invention relate to a power converter circuit, a power supply system with a power converter circuit, and a method for operating a power converter circuit.

With an increasing interest in sustainable energy production there is a focus on using photovoltaic modules for producing electric power. Photovoltaic (PV) modules include a plurality of photovoltaic (PV) cells, that are also known as solar cells. Since the output voltage of one cell is relatively low, a PV module usually includes a string with a plurality of series connected solar cells, such as between 50 to 100 cells connected in series, or even several such strings connected in parallel.

A PV module provides a DC supply voltage, while power grids, such as national power grids, have an AC supply voltage. In order to supply the energy provided by a PV module to the power grid it is, therefore, necessary to convert the DC voltage of the PV module into an AC voltage that is consistent with the AC supply voltage of the power grid.

A first approach for converting the PV module DC voltage into a power grid AC voltage includes connecting several PV modules in series so as to obtain a DC voltage that is higher than the peak voltage of the power grid AC voltage, and converting the DC voltage into the AC voltage using a DC/AC converter. The amplitude of the DC voltage is typically between 200V and 1000V. High DC voltages, however, are critical in terms of the occurrence of electric arcs.

According to a second approach, a plurality of DC/AC converters are provided, where each of these converters is connected to a PV module. The individual converters have their AC voltage outputs connected in parallel and each of these converters generates an AC voltage that is consistent with the power grid AC supply voltage from the DC voltage provided by the string of solar cells. The DC voltage provided by one PV module usually has an amplitude in the range of between 20V and 100V, depending on the number of cells that are connected in series within one module and depending on the technology used to implement the solar cells, while the peak voltage of the power grid AC voltage is about 155V or 325V, depending on the country. However, due to the large difference between input and output voltages these converters have a disadvantage in terms of efficiency.. According to a further approach, several DC/AC converters are connected in series, where each of these converters receives a DC supply voltage from a PV module. In this system a central control unit is employed to synchronize the individual DC/AC converters in a multi-level switching pattern. This system requires constant synchronized control of all individual units.

ALONSO O. ET AL: "Cascaded h-bridge multilevel converter for grid connected photovoltaic generators with independent maximum power point tracking of each solar array", PESC'03. 2003. ISBN: 978-0-7803-7754-7, pages 731-735, which is considered as the closest prior art, discloses a multilevel converter circuit with n series connected modules. Each of the n modules receive a DC input voltage and provides a PWM output voltage from the respective DC input voltage. The output voltages of the individual modules are controlled such that the multilevel converter circuit synthesizes an output voltage such as a grid voltage.

CN 102035416 A discloses a power converter circuit with a plurality of converter units each having an input, an output and a transformer. The converter units have their inputs connected in series, wherein a series circuit including the inputs of the converter units is connected to a DC power source. Further the outputs of the converter units are connected in series and the series circuit with the converter units supplies an alternating output current.

The problem underlying the present invention is to provide a power converter circuit and a power supply system that is capable of efficiently transforming relatively low DC supply voltages into a AC supply voltage that is consistent with a power grid voltage, to provide a power converter unit that is suitable to be implemented in such power converter circuit and such power supply system, and to provide a method for driving a power converter circuit.

This problem is solved by a power converter circuit of claim 1, a power supply system of claim 13, and a method of claim 18.

Examples will now be explained with reference to the drawings. The drawings serve to illustrate the basic principle, so that only aspects necessary for understanding the basic principle are illustrated. The drawings are not to scale. In the drawings the same reference characters denote like signals and circuit components.

Figure 1     schematically illustrates a power converter circuit including a plurality of DC/AC converter units connected in series;

Figure 2     which includes Figures 2A-2C illustrates different embodiments of photovoltaic arrays, each including at least one solar cell;

Figure 3     shows a block diagram illustrating a first embodiment of one DC/AC converter unit, including a DC/AC converter and a control circuit;

Figure 4     illustrates an embodiment of the DC/AC converter of Figure 3 in detail;

Figure 5     which includes Figures 5A and 5B illustrates different embodiments of switches that may be used in the DC/AC converter of Figure 4;

Figure 6     illustrates a first embodiment of the control circuit of one DC/AC converter unit;

Figure 7     illustrates a first branch of the control circuit of Figure 6 in detail;

Figure 8    illustrates a second branch of the control circuit of Figure 6 in detail;

Figure 9    shows a block diagram illustrating a second embodiment of one DC/AC converter unit, including a DC/DC converter, a maximum power point tracker, a DC/AC converter, and a control circuit;

Figure 10   illustrates a first embodiment of the DC/DC converter;

Figure 11   schematically illustrates a control circuit of the DC/DC converter of Figure 10;

Figure 12   illustrates a second embodiment of the DC/DC converter;

Figure 13   illustrates a further embodiment of a control circuit;

Figure 14   illustrates a further embodiment of a DC/AC converter unit;

Figure 15   shows timing diagrams illustrating the operating principle of the DC/AC converter unit of Figure 13;

Figure 16   illustrates an embodiment of a controller implemented in the DC/AC converter unit of Figure 13;

Figure 17   illustrates a further embodiment of a power converter circuit;

Figure 18   illustrates an embodiment of a control circuit of one DC/AC power converter unit of the power converter circuit of Figure 16;

Figure 19   illustrates an embodiment of a connection circuit of the power converter circuit of Figure 16.

## DETAILED DESCRIPTION

In the following, embodiments of the present invention will be explained in a specific context, namely in the context of converting electrical power or electrical voltages provided by a plurality of photovoltaic arrays into an AC voltage, specifically an AC power grid supply voltage. However, this is only an example, embodiments of the invention may be employed in a wide range of applications in which a conversion of DC voltages into an AC voltage is required. Any type of DC power source may be used instead of an photovoltaic array, such as a fuel cell. It is even possible, to employ DC power source of different types, such as photovoltaic arrays and fuel cells, in one application.

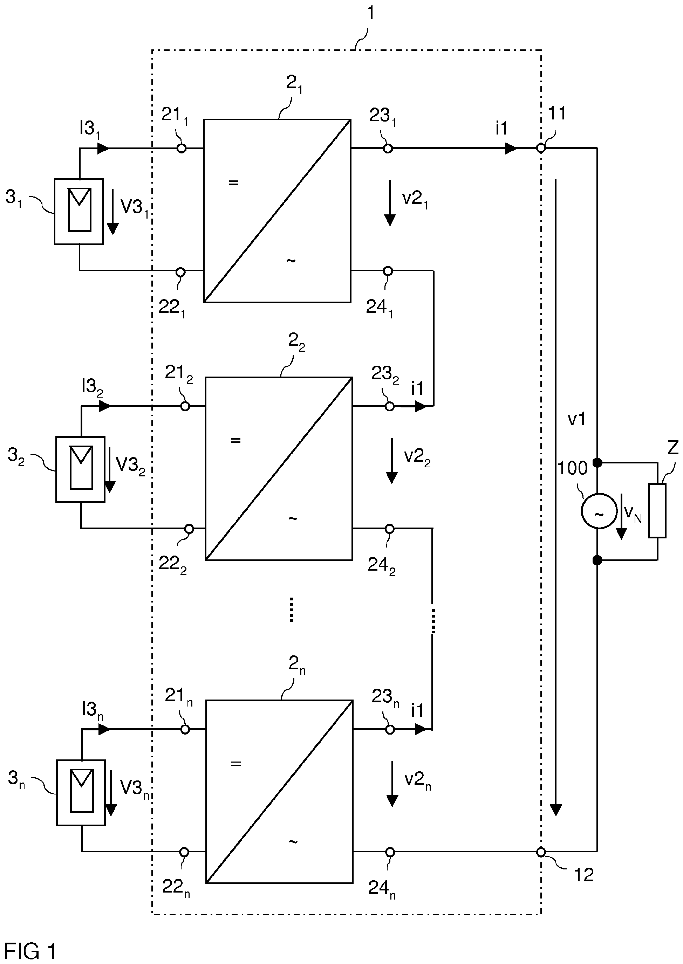

Figure 1 illustrates a first embodiment of a power converter circuit 4 for converting a plurality of n DC input voltages $V3_1$, $V3_2$, $V3_n$ into one AC output voltage V1. It should be noted in this connection that throughout the drawings DC voltages and currents will be denoted using capital letters "V" and "I", while AC voltages and currents will be denoted using lowercase letters "v" and "i". The power converter circuit includes a plurality of n converter units $2_1$, $2_2$, $2_n$. Each of these converter units includes input terminals $21_1$, $22_1$; $21_2$, $22_2$; and $21_n$, $22_n$ that are configured to be coupled to a DC power source $3_1$, $3_2$, $3_n$. In Figure 1, besides the power converter circuit 1 with the converter units $2_1$, $2_2$, $2_n$ DC power sources $3_1$, $3_2$, $3_n$ are also illustrated. These DC power sources $3_1$, $3_2$, $3_n$ together with the power converter circuit 1 form an AC power supply system or an AC current supply system. The DC power sources $3_1$, $3_2$, $3_n$ are implemented as photovoltaic (PV) modules in the embodiment illustrated in Figure 1. However employing PV modules as DC power sources is only an example. Any other type of DC power source, such as a power source including fuel cells, may be used as well. It is even possible to employ different types of DC power sources in one power supply system.

Each of the converter units $2_1$, $2_2$, $2_n$ further includes output terminals $23_1$, $24_1$; $23_2$, $24_2$; and $23_n$, $24_n$. The converter units $2_1$, $2_2$, $2_n$ are connected in series or in cascade between output terminals 11, 12 of the power converter circuit 1. For this, a first converter unit $2_1$ has a first output terminal $23_1$ coupled to a first output terminal 11 of the power converter circuit 1 and a last converter unit $2_n$ in the cascade has a second output terminal $24_n$ coupled to a second output terminal 12 of the power converter circuit 1. Further, each of the first output terminals (other than output terminal $23_1$) are connected to one second output terminal (other than output terminal $24_n$) of another converter unit.

Each of the converter units $2_1$, $2_2$, $2_n$ provides an AC output voltage $v2_1$, $v2_2$, $v2_n$ between its output terminals $23_1$, $24_1$, $23_2$, $24_2$, $23_n$, $24_n$. By having the converter units $2_1$, $2_2$, $2_n$ connected in series , an output voltage v1 between the output terminals 11, 12 of the power converter circuit 1 equals the sum of the individual output voltages $v2_1$, $v2_2$, $v2_n$ of the converter units $2_1$, $2_2$, $2_n$, that is,

$$v1 = \sum_{i=1}^{n} v2_i \qquad\qquad (1).$$

The output terminals 11, 12 of the power converter circuit 1 are configured to be connected to a power grid. In Figure 1, this power grid is represented by a voltage source 100 and a load Z connected in parallel with the power source 100. The voltage source 100 of the power grid represents a plurality of AC voltage sources in the power grid, and load Z represents a plurality of loads connected to the power sources in the power grid.

The power converter circuit 1 provides an output current i1 at the output terminal 11, 12. This output current i1 of the power converter circuit is equal to the output currents of each of the converter units $2_1$, $2_2$, $2_n$. This is due to the fact that the individual converter units $2_1$, $2_2$, $2_n$ are cascaded or connected in series.

The individual converter units $2_1$, $2_2$, $2_n$ each include at least one internal control loop which will be explained in further detail herein below. The control loop of each converter unit $2_1$, $2_2$, $2_n$ is configured to have the converter units

$2_1$, $2_2$, $2_n$ generate the output current i1 such that each output voltage $v2_1$, $v2_2$, $v2_n$ has a given phase difference relative to the output current i1. According to one embodiment the output voltages $v2_1$, $v2_2$, $v2_n$ and the output current i1 are in phase, so that the phase difference is zero. According to another embodiment, the phase difference is not zero. When setting the difference to a value other than zero, reactive power is fed into the power grid. This may help to stabilize the supply voltage $v_N$ provided by the power grid.

In Figure 1, same features of the DC voltage sources $3_1$, $3_2$, $3_n$ have the same reference characters, where the reference characters of the individual DC voltage sources $3_1$, $3_2$, $3_n$ can be distinguished from each other by subscript indices "1", "2", "n". Equivalently, same features of the converter units $2_1$, $2_2$, $2_n$ have the same reference characters that can be distinguished by subscript indices, "1" for the first converter unit $2_1$, "2" for the second converter unit $2_2$ and "n" for the n-th converter unit $2_n$. In the following, when explanations equivalently apply to each of the DC sources $2_1$, $2_2$, $2_n$ or to each of the converter units $2_1$, $2_2$, $2_n$, reference characters will be used without indices. In the following, reference character 2, for example, represents an arbitrary one of the converter units, reference character 23 represents a first output terminal of an arbitrary one of the converter units, and so on.

The power converter of Figure 1 includes n=3 converter units 2. However, having n=3 converter units is only an example. Any number of n converter units 2, wherein n>1, can be connected in series to form the power converter circuit 1.

Besides the internal control loops of the converter units 2 the power converter circuit 1 does not include an outer control loop connected to the individual converter units 2 and/or additional communication paths between the individual converter units 2, when the power converter circuit 1 is in the steady state. When the power converter circuit 1 is in the steady state the system can be defined by equation (1) and one further equation for each of the converter units 2:

$$v2_{RMS} \cdot i1_{RMS} = V3 \cdot I3 \qquad (2),$$

where $v2_{RMS}$ denotes the RMS (route mean square) value of the output voltage v2 of one converter units 2, $i1_{RMS}$ denotes the RMS value of the output current i1, V3 denotes the input voltage and 13 denotes the input current of the converter unit 2. It should be noted that (very low) losses may occur in each converter unit 2. For the sake of simplicity, these losses are not considered in equation (2).

Since equation (2) is valid for each of the individual converter units, there are n equations, each of these equations describing the relationship between the input power and the average output power of each of the converter units 2, where the input power Pin is given as

$$Pin = V3 \cdot I3 \qquad (3),$$

and the output power Pout is given as

$$Pout = v2_{RMS} \cdot i1_{RMS} \qquad (4).$$

The input power Pin of each of the individual converter units 2 and the input voltage V3 and the input current 13, respectively, are external parameters given by the individual DC power sources 3. The output voltage v1 between the output terminals 11, 12 is defined by the supply voltage $v_N$ of the power grid, so that

$$v1 = v_N \qquad (5).$$

Thus, there are n+1 variables in the power converter circuit 1, namely the output current i1 and the n output voltages v2 of the individual converter units 2. However, referring to equations (1), (5) and (2) the system is defined by n+1 equations, so that each of the n+1 variables is unique when the system is in its steady state. Besides having each of the converters 2 generate the output voltage v2 such that it is in phase with the output current i1 no additional control or regulation mechanism is required. When the output voltages v2 are in phase with the output current i1 the real output power of each converter unit equals the apparent output power, so that the reactive output power is zero.

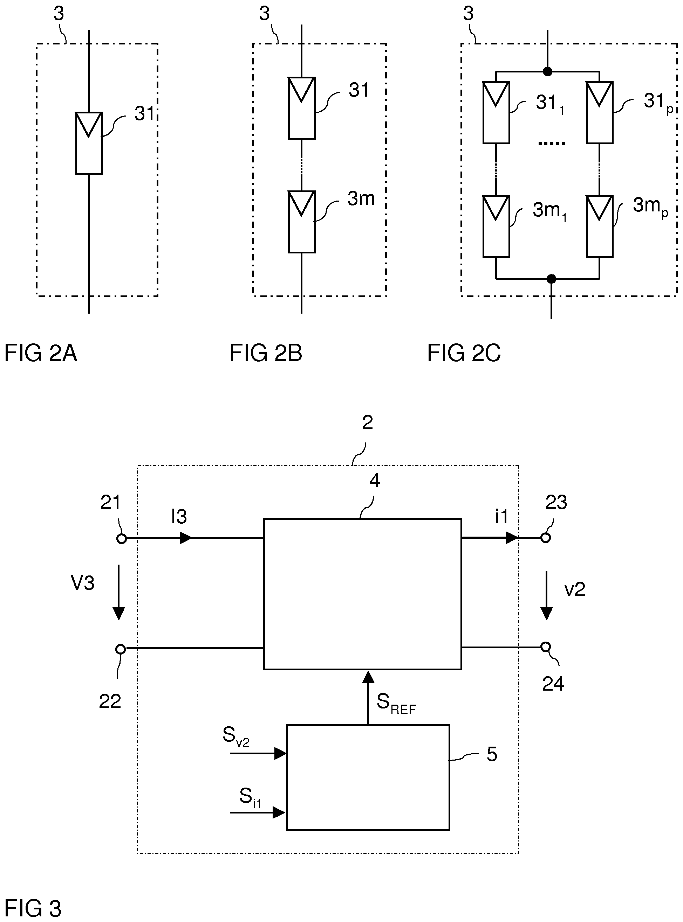

The DC power sources 3 implemented as PV arrays are only schematically illustrated in Figure 1. These PV arrays each include at least one solar cell. Some exemplary embodiments of PV arrays including at least one solar cell are illustrated in Figures 2A to 2C. Figure 2A illustrates a first embodiment. In this embodiment, the PV array 3 includes only one solar cell 31. Referring to a further embodiment illustrated in Figure 2B, one PV array 3 includes a string of m solar cells 31, 3m wherein m>1, connected in series. According to yet another embodiment illustrated in Figure 2C, p strings of solar cells are connected in parallel, wherein p>1. Each of the strings includes m solar cells $31_1$, $3m_1$, $31_p$, $3m_p$. However, the embodiments illustrated in Figures 2A to 2C are only exemplary. Many other solar cell arrangements may be used as well as a DC source 3.

Figure 3 illustrates a first embodiment of a converter unit 2 for converting the DC input voltage provided by one DC source (not shown in Figure 3) into an AC output voltage v2. The converter unit 2 includes a DC/AC converter 4 connected between the input terminals 23, 22 and the output terminals 23, 24. The DC/AC converter receives the DC voltage V3 provided by the DC power source as an input voltage and the DC supply current 13 of the DC power source as an input current. The DC/AC converter 4 further receives a reference signal $S_{REF}$, which may be an alternating signal having a frequency and a phase. The DC/AC converter 4 is configured to generate the output voltage v2 dependent on the reference signal $S_{REF}$ such that a frequency and a phase of the output voltage v2 correspond to a frequency and a phase, respectively, of the reference signal $S_{REF}$. The DC/AC converter 4 can be implemented like a conventional DC/AC converter that is configured to generate an output current in phase with an alternating reference signal. Such DC/AC converters are commonly known.

The reference signal $S_{REF}$ is generated by a control circuit 5 dependent on an output voltage signal $S_{v2}$ and an output current signal $S_{i1}$. The output voltage signal $S_{v2}$ represents the output voltage v2 and may be a scaled version of this output voltage v2. The output voltage signal $S_{v2}$ can be obtained in a conventional manner from the output voltage v2 using a voltage measurement circuit (not illustrated). The output current signal $S_{i1}$ represents the output current i1, i.e. the output current signal $S_{i1}$ is dependent on the output current i1. According to one embodiment, the output current signal $S_{i1}$ is a scaled version of the output current i1. The output current signal $S_{i1}$ can be generated in a conventional manner from the output current i1 using a current measurement circuit (not illustrated).

The control circuit 5, which will also be referred to as controller in the following, generates the reference signal $S_{REF}$ dependent on the output voltage signal $S_{v2}$ and the output current signal $S_{i1}$ such that the output voltage v2, when generated in correspondence with the reference signal $S_{REF}$, is in phase with the output current i1. It should be noted that, since the output voltage v2 and the output current i1 are alternating signals, the output voltage signal $S_{v2}$ and the output current signal $S_{i1}$ are also alternating signals. In the converter unit 2, the DC/AC converter 4 and the controller 5 are part of a control loop that controls the output current i1 to be in phase with the output voltage v2.

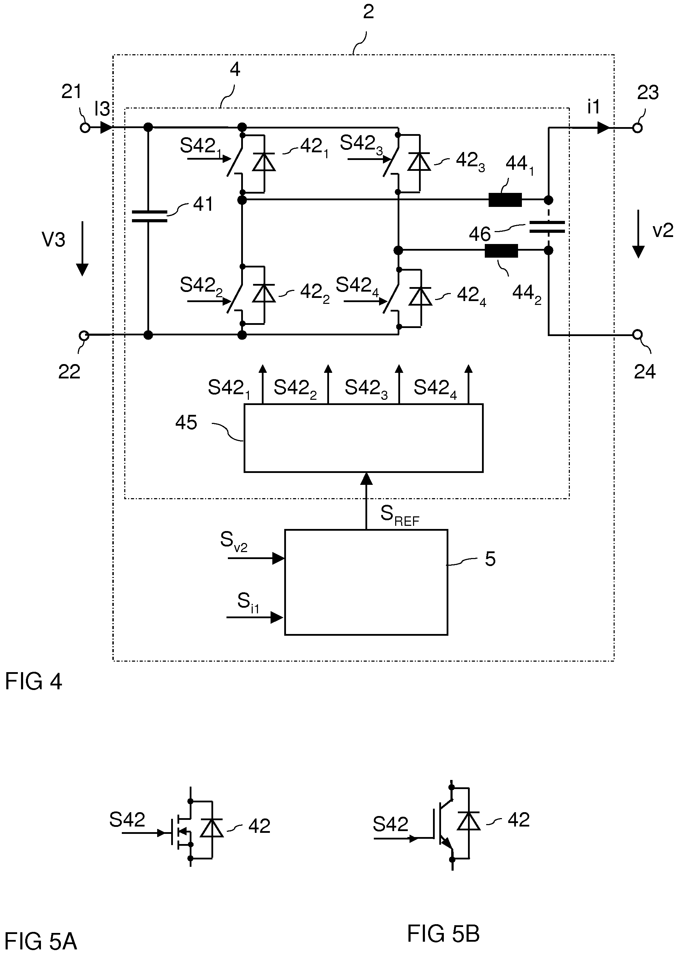

Although a conventional DC/AC converter may be used in the converter unit 2 as the DC/AC converter 4 connected between the input terminals 21, 22 and the output terminals 23, 24, one example of a DC/AC converter 4 will be explained in detail with reference to Figure 4, in order to ease understanding of embodiments of the invention.

The converter 4 illustrated in Figure 4 is a full-bridge (H4) converter with two half-bridge circuits each connected between the input terminals 21, 22. Each of these half-bridge circuits includes two switches each having a load path and a control terminal. The load paths of the two switches of one half-bridge circuit are connected in series between the input terminals 21, 22, where a first switch $42_1$ and a second switch $42_2$ form the first half-bridge, and a third switch $42_3$ and a fourth switch $42_4$ form the second half-bridge. Each of the half-bridges includes an output, where an output of the first half-bridge is formed by a circuit node common to the load paths of the first and second switch $42_1$, $42_2$. An output of the second half-bridge is formed by a circuit node common to the load paths of the third and fourth switches $42_2$, $42_4$. The output of the first half-bridge is coupled to the first output terminal 23 of the converter unit 2 via a first inductive element $44_1$, such as a choke. The output terminal of the second half-bridge is coupled to the second output terminal 24 of the converter unit 2 via a second inductive element $44_2$, such as a choke. According to a further embodiment (not illustrated) only of the first and second inductive elements $44_1$, $44_2$ is employed. The converter 4 further includes an input capacitance 41, such as a capacitance, connected between the input terminals 21, 22.

Each of the switches $42_1$, $42_2$, $42_3$, $42_4$ receives a control signal $S42_1$, $S42_2$, $S42_3$, $S42_4$ at its control terminal. These control signals $S42_1$-$S42_4$ are provided by a drive circuit 45 dependent on the reference signals $S_{REF}$ received from the controller 5. The drive signal $S42_1$-$S42_4$ are pulse-width modulated (PWM) drive signals configured to switch the corresponding switch $42_1$-$42_4$ on and off. It should be noted that a switching frequency of the PWM signals $S42_1$-$S42_4$ is significantly higher than a frequency of the alternating reference signal $S_{REF}$. The reference signal $S_{REF}$ may be a sinusoidal signal with a frequency of 50Hz or 60Hz, depending on the country in which the power grid is implemented, while the switching frequency of the individual switches $42_1$-$42_4$ may be in the range of several kHz up to several 10kHz, or even up to several 100 kHz. The drive circuit 45 is configured to individually adjust the duty cycle of each of the drive signals $S42_1$-$S42_4$ between 0 and 1 in order to have the waveform of the output voltage v2 follow the waveform of the reference signal $S_{REF}$. When the duty cycle of one drive signal is 0, the corresponding switch is permanently switched off, and when the duty cycle of one drive signal is 1, the corresponding switch is permanently switched on. The duty cycle of a drive signal is the relationship between the time periods for which a drive signal switches the corresponding switch on relative to the duration of one switching cycle. The duration of one switching cycle is the reciprocal of the switching frequency.

Referring to what has been explained before, the output voltage v2 is an AC voltage with a positive half-cycle in which the output voltage v2 is positive, and a negative half-cycle in which the output voltage v2 is negative. The time behavior of the output voltage v2 is dependent on the reference signal $S_{REF}$ which also has positive and negative half-cycles.

Two possible operating principles of the converter 4 will briefly be explained. First, it is assumed that a positive half-cycle of the output voltage v2 is to be generated. According to a first operating principle, which is known as bipolar switching or 2-level switching, the first and fourth switches $42_1$, $42_4$ are switched on and off synchronously, while the second and third switches $42_2$, $42_3$ are permanently switched off. During an on-phase of the first and fourth switches $42_1$, $42_4$ an output current i1 is forced through the choke(s) $44_1$, $44_2$ that is dependent on voltage difference between the input voltage V3 across the input capacitance 41 and the output voltage v2, where the output voltage v2 is defined by the power grid voltage $v_N$. The switches $42_1$-$42_4$ each include a freewheeling element, such as a diode, that is also illustrated in Figure 4. The freewheeling elements of the second and third switches $42_2$, $42_3$ take the current flowing through the choke(s) $44_1$, $44_2$ when the first and fourth switches $42_1$, $42_4$ are switched off. In this method, the amplitude of the output current i1 can be adjusted through the duty cycle of the synchronous switching operation of the first and fourth switches $42_1$, $42_4$. During the negative half-cycle the second and third switches $42_2$, $42_3$ are switched on and off synchronously, while the first and fourth switches $42_1$, $42_4$ are permanently off.

According to a second operating principle, which is known as phase chopping or 3-level switching, the first switch $42_1$ is permanently switched on during the positive half cycle of the output voltage v2, the second and third switches $42_2$, $42_3$ are permanently off, and the fourth switch $42_4$ is switched on and off in a clocked fashion. During an on-phase of the first and fourth switches $42_1$, $42_4$ an output current i1 is forced through the choke(s) $44_1$, $44_2$ that is dependent on voltage difference between the input voltage V3 across the input capacitance 41 and the output voltage v2, where the output voltage v2 is defined by the power grid voltage $v_N$. During an off-phase of the fourth switch $42_4$ a freewheeling path is offered by the freewheeling element of switch $42_3$ and the switched-on first switch $42_1$ thus enabling a zero volt state across the output chokes. In this method, the amplitude of the output current i1 can be adjusted through the duty cycle of the switching operation of the fourth switch $42_1$, $42_4$. During the negative half-cycle the first and fourth switches $42_1$, $42_4$ are permanently switched off, the second switch $42_2$ is permanently switched on, and the third switch $42_3$ is switched on and off in a clocked fashion.

In order to control an instantaneous amplitude of the output current i1 during the positive half-cycle, the drive circuit 45 varies the duty cycle of the at least one switch that is switched on and off in a clocked fashion. The duty cycle of the at least one clocked switch and the duty cycle of its drive signal, respectively, is increased in order to increase the amplitude of the output current i1 and is decreased in order to decrease the amplitude of the output current i1. This duty cycle is dependent on the instantaneous amplitude of the reference signal $S_{REF}$.

The switches $42_1$-$42_4$ may be implemented as conventional electronic switches. Referring to Figure 5A, which illustrates a first embodiment for implementing the switches, the switches may be implemented as MOSFETs, specifically as n-type MOSFETs. Electronic switch 42 in Figure 5A represents an arbitrary one of the switches $42_1$-$42_4$. A MOSFET, such as the n-type MOSFET illustrated in Figure 5A has an integrated diode that is also illustrated in Figure 5A. This diode is known as body diode and may act as a freewheeling element. A drain-source path, which is a path between a drain terminal and a source terminal, forms a load path of a MOSFET, and a gate terminal forms a control terminal.

Referring to Figure 5B, the switches $42_1$-$42_4$ could also be implemented as IGBTs, where additionally a diode may be connected between a collector and an emitter terminal of the IGBT. This diode acts as a freewheeling element. In an IGBT, the load path runs between the emitter and the collector terminal, and the gate terminal forms a control terminal.

According to a further embodiment, two of the four switches, such as the first and third transistors $42_1$, $42_3$ are implemented as SCR Thyristors, while the other two switches are implemented as MOSFET.

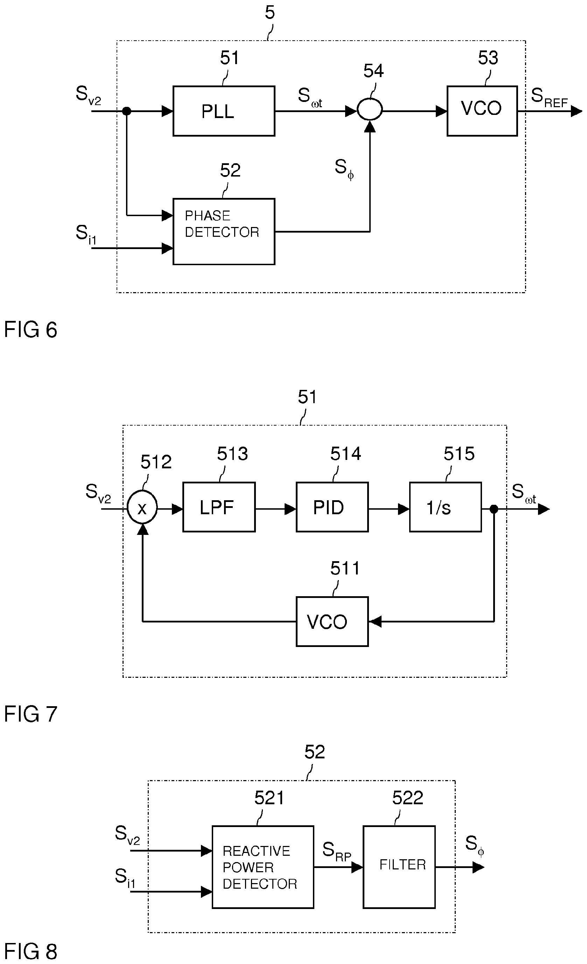

Figure 6 schematically illustrates an embodiment of the controller 5 that generates the reference signal $S_{REF}$ dependent on the output voltage signal $S_{V2}$ and the output current signal $S_{i1}$. Figure 6 shows a block diagram of the controller 5 in order to illustrate its operating principle. It should be noted that the block diagram illustrated in Figure 6 merely serves to illustrate the functionality of the controller 5 rather than its implementation. The individual function blocks, that will be explained in further detail below, may be implemented using a conventional technology that is suitable to implement a controller. Specifically, the function blocks of the controller 5 may be implemented as analog circuits, digital circuits, or may be implemented using hardware and software, such as a microcontroller on which a specific software is running in order to implement the functionality of the controller 5.

Referring to Figure 6, the controller 5 includes two control loops, a first control loop including a phase locked loop (PLL) 51 that provides a frequency signal $S_{\omega t}$ defining the frequency of the reference signal $S_{REF}$, and a second control loop with a phase detector 52 providing a phase signal $S_{\varphi}$. While the PLL 51 only receives the output voltage signal $S_{V2}$, the phase shift detector 52 receives the output voltage signal $S_{V2}$ and the output current signal $S_{i1}$. The phase signal $S_{\varphi}$ represents an instantaneous and/or a previous phase shift between the output voltage signal $S_{V2}$ and the output current signal $S_{i1}$ and, therefore, represents a phase shift between the output voltage v2 and the output current i1. The phase signal $S_{\varphi}$ serves to adjust the phase of the reference signal $S_{REF}$ in order to set a phase difference between the output voltage v2 and the output current i1 to a given value.

According to one embodiment, the phase signal $S_{\varphi}$ is generated such that a phase of the reference signal $S_{REF}$

is adjusted such that the reference signal $S_{REF}$ is in phase with the output voltage v2. Since the output current i1 is generated to be in phase with the reference signal $S_{REF}$, the output current i1 is also in phase with the output voltage v2.

According to another embodiment, the phase of the reference signal $S_{REF}$ is adjusted such that there is a given phase difference between the reference signal $S_{REF}$ and the output voltage v2, so that there is a given phase difference between the output current i1 and the output voltage v2. The desired phase difference is set by the phase detector 52.

Referring to Figure 6, the reference signal $S_{REF}$ is provided by an oscillator 53, such as a voltage control oscillator VCO that receives a reference and phase signal that is dependent on the frequency signal $S_{\omega t}$ and the phase signal $S_\varphi$. The reference and phase signal is provided by an operator 54 that receives the frequency signal $S_{\omega t}$ and the phase signal $S_\varphi$ and that generates the reference and phase signal from these input signals. According to one embodiment, the operator 54 simply adds the reference signal $S_{\omega t}$ and the phase signal $S_\varphi$. According to a further embodiment, the operator 54 forms a weighted sum of the frequency signal $S_{\omega t}$ and the phase signal $S_\varphi$.

Figure 7 illustrates an embodiment of the PLL 51 of Figure 6. This PLL includes an VCO 511 that receives the frequency signal $S_{\omega t}$ and generates an oscillating signal with a frequency that is dependent on the frequency signal $S_{\omega t}$. This oscillating signal is multiplied with the output voltage signal $S_{v2}$ using a multiplier. An output signal of the multiplied is filtered using a low-pass filter 513 and PID filter 514 connected downstream the low-pass filter. Instead of a PID-filter a PI-filter may be used as well. The output signal of the filter 514 is multiplied with 1/s in the frequency domain, where the result of this multiplication ist the frequency signal $S_{\omega t}$.

Figure 8 illustrates an embodiment of the phase detector 52. This phase detector includes a reactive power detector 521 that receives the output voltage signal $S_{v2}$ and the output current signal $S_{i1}$. The reactive power detector 521 provides a reactive power signal $S_{RP}$ that is representative of the instantaneous reactive power provided by the converter 4 and is, therefore, representative of a phase shift between the output current i1 and the output voltage v2. This reactive power signal $S_{RP}$ may be obtained by multiplying the output voltage signal $S_{v2}$ with the output current signal $S_{i1}$ in order to obtain a signal that represents the apparent power provided by the converter 2, and to calculate the reactive power from this signal. The reactive power signal $S_{RP}$ is filtered using a filter 522 in order to obtain the phase signal $S_\varphi$. The filter 522 may be a conventional filter, such as a P-filter, a PI-filter or a PID-filter.

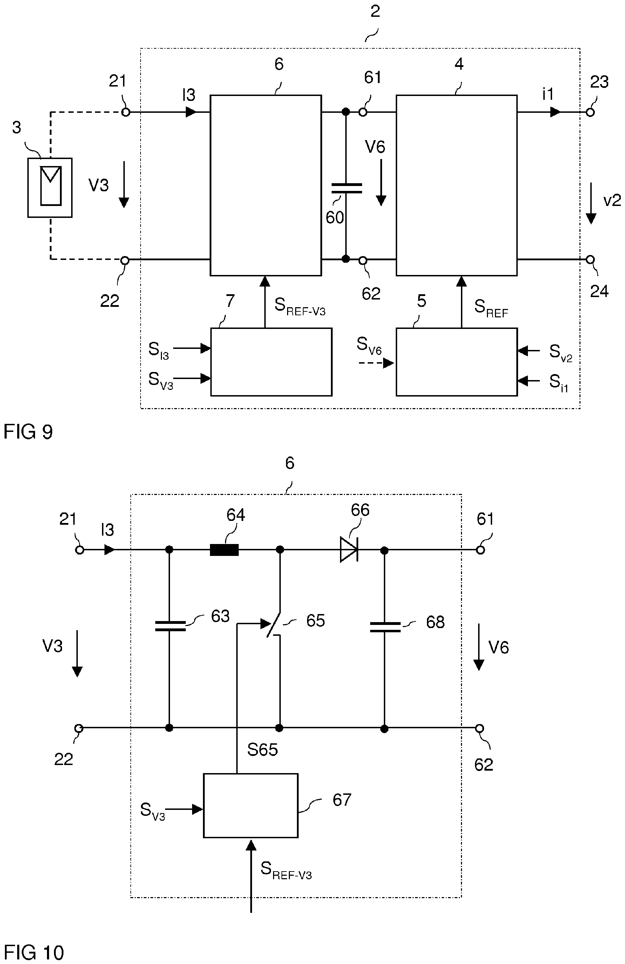

Figure 9 illustrates a further embodiment of one converter unit 2. This converter unit besides the DC/AC converter 4 and the controller 5 includes a DC/DC converter 6 connected between the input terminals 21, 22, and the DC/AC converter 4. The DC/AC converter 4 may be implemented as explained with reference to Figures 4 to 8 with the difference that the DC/AC converter 4 of Figure 9 receives a DC input voltage V6 from the DC/DC converter 6 instead of the input voltage V3 of the converter unit 2. A capacitor 60 connected between the terminals 61, 62 may represent an output capacitor of the DC/DC converter 6 or an input capacitor 4 of the DC/AC converter 4, or both.

The DC/DC converter 6 is configured to adjust the input voltage V3 or the input current 13 to a voltage or current value, respectively, that is dependent on a reference signal $S_{REF-V3}$ received by the DC/DC converter 6. For explanation purposes it is assumed that the DC/DC converter 6 adjusts the input voltage V3 dependent on the reference signal $S_{REF-V3}$. Adjusting the input voltage V3 of the converter unit 2 may help to operate the DC power source 3 connected to the input terminals 21, 22, in an optimum operating point. This will be explained in the following.

A solar cell and, therefore, a PV module including several solar cells, acts like a power generator providing a DC output voltage and a DC output current when it is exposed to sunlight. For a given light power received by the PV array there is a range of output currents and a range of corresponding output voltages at which the PV array can be operated. However, there is only one output current and one corresponding output voltage at which the electric power provided by the PV array has its maximum. The output current and the output voltage at which the output power assumes its maximum define the maximum power point (MPP). The MPP varies dependent on the light power received by the array and dependent on the temperature.

Referring to Figure 9, the converter unit 2 further includes a maximum power point tracker (MPPT) that is configured to provide the reference signal $S_{REF-V3}$ such that DC/DC converter 6 adjusts the input voltage such that the DC source 3 is operated in its MPP. The MPPT 7 receives an input current signal $S_{I3}$ that represents the input current 13 provided by the DC source 3 (illustrated in dashed lines in Figure 9), and an input voltage signal $S_{V3}$ that represents the input voltage V3 provided by the DC source 3. From the input current signal $S_{I3}$ and the input voltage signal $S_{V3}$ the MPPT 7 calculates the instantaneous input power provided by the DC source 3. The input voltage signal $S_{V3}$ can be obtained from the input voltage V3 in a conventional manner by, for example, using a voltage measurement circuit. Equivalently, the input current signal $S_{I3}$ can be obtained from the input current 13 in a conventional manner using, for example, a current measurement circuit. Those voltage measurement circuits and current measurement circuits are commonly known and are not illustrated in Figure 9.

The basic operating principle of the MPPT 7 in order to find the MPP is to vary the reference signal $S_{REF-V3}$ within a given signal range and to determine the input power provided by the DC source 3 for each of the input voltages V3 defined by the different reference signals $S_{REF-V3}$. The MPPT 7 is further configured to detect the input voltage V3 for which the maximum input power has been obtained, and to finally set the reference signal $S_{REF-V3}$ to that value for which the maximum input power has been detected.

Since the solar energy received by the PV array 3 may vary the MPPT 7 is further configured to check whether the DC source 3 is still operated in its maximum power point either regularly or when there is an indication that the maximum power point might have changed. An indication that the maximum power point might have changed is, for example, when the input current 13 represented by the input current signal $S_{I3}$ changes without the reference signal $S_{REF-V3}$ having changed. The regular check or the event-driven check of the MPPT 7 whether the DC source 3 is still operated in its maximum power point, may include the same algorithm that has been explained before for detecting the maximum power point for the first time. Conventional algorithms for detecting the maximum power point that can be implemented in the MPPT 7 include, for example, a "hill climbing algorithm" or a "perturb-and-observe algorithm".

The DC/DC converter 6 can be implemented like a conventional DC/DC converter. A first embodiment of a DC/DC converter 6 that can be used in the converter unit 2 is illustrated in Figure 10. The DC/DC converter 6 illustrated in Figure 10 is implemented as a boost converter. This type of converter includes a series circuit with an inductive storage element 64, such as a choke, and a switch 65 between the input terminals of the DC/DC converter 6, where the input terminals of the DC/DC converter 6 correspond to the input terminals 21, 22 of the converter unit 2. Further, a rectifier element 66, such as a diode, is connected between a circuit node common to the inductive storage element 64 and the switch 65 and a first output terminal 61 of the DC/DC converter 6. A second output terminal 62 of the DC/DC converter 6 is connected to the second input terminal 22. An output voltage V6 of the DC/DC converter is available between the output terminals 61, 62. Referring to Figure 10, the DC/DC converter 6 may further include a first capacitive storage element 63, such as a capacitor, between the input terminals 21, 22, and a second capacitive storage element 68, such as a capacitor, between the output terminals 61, 62. The second capacitive storage element 68 acts as an energy storage that is necessary when generating the AC output voltage v2 from the DC voltage V6 available at the output of the DC/DC converter 6.

The switch 65 can be implemented as a conventional electronic switch, such as a MOSFET or an IGBT. Further, the rectifying element 66 could be implemented as a synchronous rectifier, which is a rectifier implemented using an electronic switch, such as a MOSFET or an IGBT.

The DC/DC converter 6 further includes a controller 67 for generating a drive signal S65 for the switch 65. This drive signal S65 is a pulse-width modulated (PWM) drive signal. The controller 67 is configured to adjust the duty cycle of this drive signal S65 such that the input voltage V3 corresponds to the desired input voltage as represented by the reference signal $S_{REF-V3}$. For this, the control circuit 67 receives the reference signal $S_{REF-V3}$ and the input voltage signal $S_{V3}$ that represents the input voltage V3.

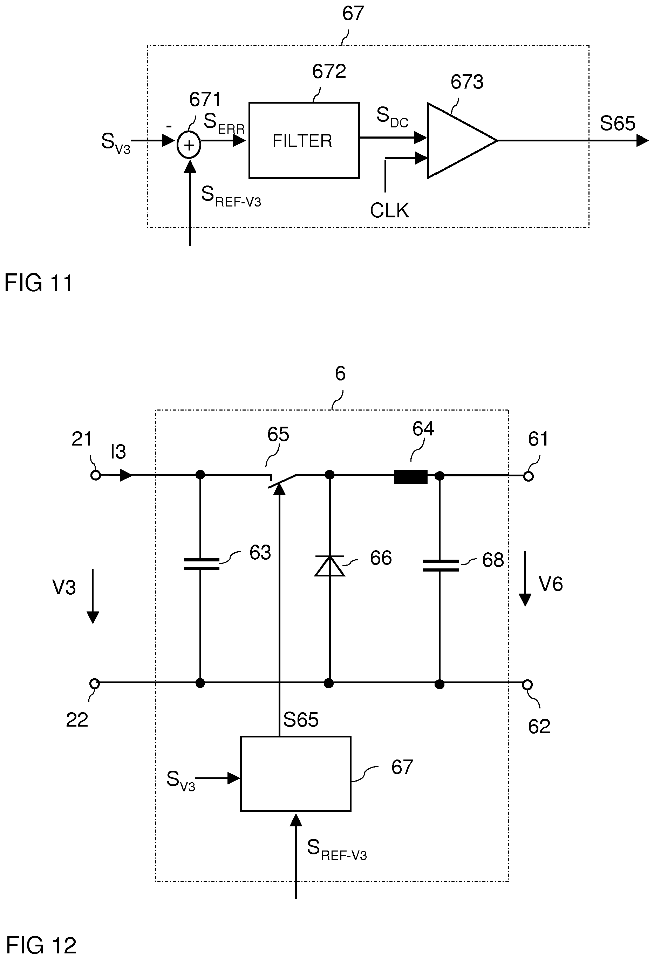

A first embodiment of the control circuit 67 is illustrated in Figure 11. Like in Figure 6, which illustrates an embodiment of the controller 5, in Figure 11 functional blocks of the controller 67 are illustrated. These functional blocks can be implemented as analog circuits, as digital circuits or can be implemented using hardware and software. Referring to Figure 11, the control circuit 67 calculates an error signal $S_{ERR}$ from the input voltage signal $S_{V3}$ and the reference signal $S_{REF-V3}$. The error signal $S_{ERR}$ is calculated by either subtracting the input voltage signal V3 from the reference signal $S_{REF-V3}$ (as illustrated) or by subtracting the reference signal $S_{REF-V3}$ from the input voltage signal $S_{V3}$. The error signal $S_{ERR}$ is provided by a subtraction element 671 that receives the input voltage signal $S_{V3}$ and the reference signal $S_{REF-V3}$.

The error signal $S_{ERR}$ is received by a filter 672 that generates a duty cycle signal $S_{DC}$ from the error signal $S_{ERR}$. The duty cycle signal $S_{DC}$ represents the duty cycle of the drive signal S65 provided by the control circuit 67. The filter 672 can be a conventional filter for generating a duty cycle signal $S_{DC}$ from an error signal $S_{ERR}$ in a PWM controller of a DC/DC converter, such as a P-filter, a PI-filter, or a PID-filter.

A driver 673 receives the duty cycle signal $S_{DC}$ and a clock signal CLK and generates the drive signal S65 as a PWM signal having a switching frequency as defined by the clock signal CLK and a duty cycle as defined by the duty cycle signal $S_{DC}$. This driver 673 can be a conventional driver that is configured to generate a PWM drive signal based on a clock signal and a duty cycle information. Such drivers are commonly known, so that no further information are required in this regard.

The basic control principle of the controller 67 of Figure 10 will briefly be explained. Assume that the input voltage V3 has been adjusted to a given value represented by the reference signal $S_{REF-V3}$ and that the input voltage V3 is to be increased as defined by the reference signal $S_{REF-V3}$. In this case the control circuit 67 reduces the duty cycle of the drive signal S65. Reducing the duty cycle of the drive signal S65 results in a decreasing (average) input current 13, where decreasing the input current 13, at a given power provided by the DC source 3 results in an increasing input voltage V3. Equivalently, the duty cycle is increased when the input voltage V3 is to be decreased. An increase in the duty cycle results in an increase of the input current 13.

The boost converter according to Figure 10 does not only provide a load to the DC source 3 in order to operate the load in its maximum power point. This boost converter also generates an output voltage V6 received by the DC/AC converter 4 (see Figure 9) that his higher than the input voltage V3. Further, the boost converter is implemented such that the output voltage V6 is higher than a peak voltage of the output voltage v2 of the DC/AC converter, but lower than a voltage blocking capability of the switches (see $42_1$-$42_4$ in Figure 4) implemented in the DC/AC converter.

Referring to Figure 12, the DC/DC converter 6 may also be implemented as a buck converter. This buck converter includes a series circuit with an inductive storage element 64, such as a choke, and a switch 65 between the first input terminal 21 and the first output terminal 61. A freewheeling element 66, such as a diode, is connected between the second output terminal 62 and a circuit node common to the inductive storage element 64 and the switch 65. A capacitive storage element 63, such as a capacitor, is connected between the input terminals 21, 22.

Like in the converter of Figure 10, the switch 65 in the converter of Figure 12 can be implemented as a conventional electronic switch, such as a MOSFET or an IGBT. Further, the freewheeling element 66 could be implemented as a synchronous rectifier.

Like in the boost converter according to Figure 10, the switch 65 in the buck converter according to Figure 12 is driven by a PWM drive signal S65 provided by a control circuit 67. The control circuits 67 may be implemented as illustrated in Figure 11. The operating principle of the control circuit 67 in the buck converter 12 is the same as in the boost converter 10, i.e., the duty cycle of the drive signal S65 is increased when the input voltage V3 is to be decreased, and the duty cycle is decreased, when the input voltage V3 is to be decreased.

It should be noted that implementing the DC/DC converter 6 as a boost converter (see Figure 10) or as a buck converter (see Figure 12) is only an example. The DC/DC converter 6 could also be implemented as a buck-boost converter, a boost-buck-converter a flyback converter, and so on. Whether a boost converter or a buck converter is used for tracking the maximum power point of the DC source and for providing the input voltage V6 to the DC/AC converter 4, influences the number of converter units 2 to be connected in series in order to generate a desired output voltage v1. This will be explained by the way of an example in the following.

Assume that a sinusoidal output voltage v1 with $240V_{RMS}$ is desired. The peak voltage (maximum amplitude) of this voltage v1 is 338V (240V·sqrt(2), where sqrt is the square root). Further assume that the DC sources 3 are PV arrays each providing an output voltage between 24V and 28V when exposed to sunlight. The DC/AC converter 4 has a buck characteristic, which means that the peak value of the output voltage v2 (see Figure 4) is less than the received DC input voltage V3 or V6, respectively. Thus, when buck converters are employed as DC/DC converters 6 in the converter units 2 or when no DC/DC converters are used, at least 15 converter units 2 with PV panels connected thereto need to be connected in series. This is based on the assumption that each PV array generates a minimum voltage of V3=24V and that a peak voltage of the output voltage v1 of 338V is required. The number of 15 is obtained by simply dividing 338V through 24V (338V/24V=14,08) and rounding the result to the next higher integer.

When, however, a boost converter is used as a DC/DC converter that, for example, generates an output voltage V6=35V from the input voltage V3 (which is between 24V and 28V) the number of converter units 2 to be connected in series may be reduced to about 12.

In the converter illustrated in Figure 9, the output voltage V6 of the DC/DC converter may vary dependent on the input power received at the input terminals 21, 22 and dependent on the output current i1 or, more exactly, the average of the output current i1. According to a further embodiment, the control circuit 5 is further configured to control the input voltage of the DC/AC converter 4 and the output voltage of the DC/DC converter 6, respectively. For this, the control circuit 5 receives an input voltage signal $S_{V6}$ that represents the input voltage V6. The control circuit 5 is configured to adjust the input voltage V6 by varying the duty cycle of those switches in the DC/AC converter 4 that are driven in a clocked fashion. The input voltage can be increased by generally decreasing the duty cycle and can be decreased by generally increasing the duty cycle. For this, the control circuit 5 includes a further control loop, where this control loop is slower than the control loop that causes the output current i1 to follow the reference signal $S_{REF}$. This control loop is, for example configured to cause variations of the duty cycle at a frequency of between 1Hz and 10Hz.

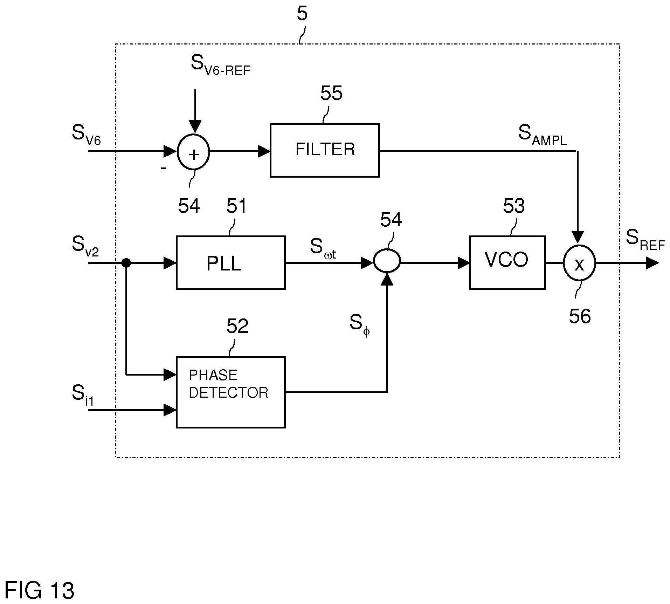

Figure 13 illustrates an embodiment of a control circuit 5 that is also configured to control the input voltage V6. This control circuit is based on the control circuit illustrated in Figure 6 and includes a further control loop that serves to adjust the amplitude of the reference signal $S_{REF}$ dependent on the input voltage signal. The control loop includes: a further subtraction element 54, a filter 55 and a multiplier 56. The subtraction element receives the input voltage signal $S_{V6}$ and a reference signal $S_{V6-REF}$ that represents a set value of he input voltage V6. The subtraction element 54 generates a further error signal based on a difference between the input voltage signal $S_{V6}$ and the reference signal $S_{V6-REF}$. The filter 55 receives the further error signal and generates an amplitude signal $S_{AMPL}$ that represents an amplitude of the reference signal $S_{REF}$ from the further error signal. The filter may have a P-characteristic, an I-characteristic, a PI-characteristic, or a PID-characteristic. The amplitude signal and the output signal of the VCO 53 are received by the multiplier 56 that provides the reference signal $S_{REF}$. The reference signal $S_{REF}$ has an amplitude that is dependent on the input voltage V6 and that serves to control the input voltage, and a frequency and phase provided by the VCO and that serves to adjust frequency and phase of the output current i1.

The input voltage reference signal $S_{V6-REF}$ may have a fixed value that is, selected such that the input voltage V6 is sufficiently below the voltage blocking capability of switches employed in the DC/AC converter.

The control circuit illustrated in Figure 13 could also be implemented in a converter as illustrated in Figure 4 in which the DC/DC converter is omitted. In this case, the input voltage to be controlled is the output voltage V3 of the PV module. An input voltage reference signal may in this case be provided by an MPPT in order to operate the PV module in its MPP.

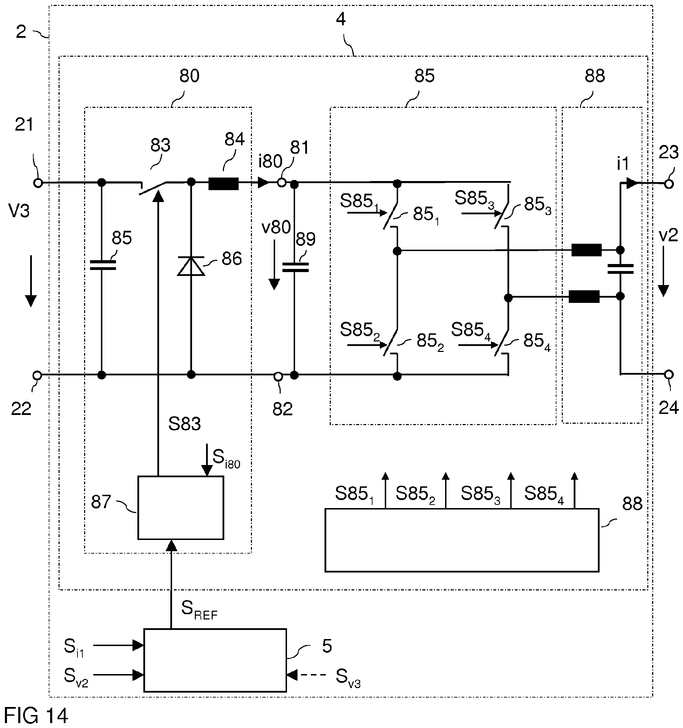

Figure 14 illustrates a further embodiment of a converter unit 2 with a DC/AC converter 4. The converter unit 2 may further include a DC/DC converter 6 (see Figure 9) connected between the input terminals 21, 22 and the DC/AC converter. However, such DC/DC converter is not illustrated in Figure 13. Dependent on whether or not the converter unit 2 includes a DC/DC converter the DC/AC converter 4 receives the input voltage V3 of the converter unit 2 or the output voltage of the DC/DC converter as an input voltage. Just for explanation purposes it is assumed that the DC/AC converter 4 receives the input voltage V3.

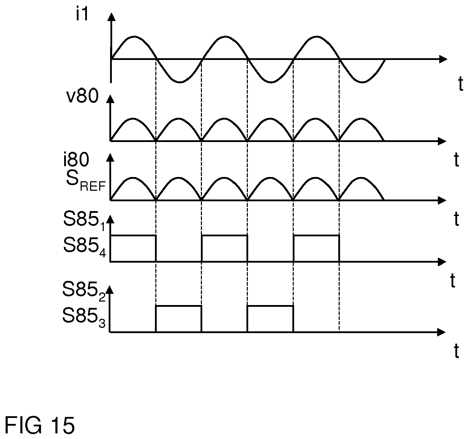

The DC/AC converter of Figure 4 includes a buck converter 80 that receives the input voltage V3 as an input voltage. The buck converter 80 is configured to generate an output current i80 which is a rectified version of the output current i1 of the DC/AC converter 4. Assume, for example that a desired waveform of the output current i1 is a sinusoidal waveform. In this case, the output current i80 provided by the converter 80 has the waveform of a rectified sinusoidal curve or the waveform of the absolute value of a sinusoidal curve, respectively. This is schematically illustrated in Figure 15, in which exemplary timing diagrams of a sinusoidal output current i1 and the corresponding output current i80 of the converter 80 are illustrated.

The output current i1 of the DC/AC converter 4 is produced from the output current i80 of the buck converter 80 using a bridge circuit 85 with two half-bridges, where each of these half-bridges is connected between output terminals 81, 82 of the buck converter 80. A first half-bridge includes a first and a second switch $85_1$, $85_2$ connected in series between the output terminals 81, 82, and a second half-bridge includes a third switch $85_3$ and a fourth switch $85_4$ connected in series between the output terminals 81, 82. An output terminal of the first half-bridge, which is a circuit node common to the first and second switches $85_1$, $85_2$ is coupled to the first output terminal 23. An output terminal of the second half-bridge, which is a circuit node common to the third and fourth switch $85_3$, $85_4$ is coupled to the second output terminal 24 of the converter unit 2. Optionally, an EMI filter 88 is coupled between the output terminals of the half-bridges and the output terminals 23, 24 of the converter unit 2.

Referring to Figure 14, the output current i80 of the buck converter 80 has a frequency which is twice the frequency of the output current i1. A switching frequency of the switches $85_1$-$85_4$ of the bridge circuit 85 corresponds to the frequency of the output current i1. During a positive half-cycle of the output current i1 the first and fourth switch $85_1$, $85_4$ are switched on, and during a negative half-cycle of the output voltage v2 the second and third switches $85_2$, $85_3$ are switched on. The switches of the bridge circuit 85 are driven by drive signals $S85_1$-$S85_4$ generated by a drive circuit 88. Timing diagrams of these drive signals $S85_1$-$S85_4$ are also illustrated in Figure 15. In Figure 14, a high signal level of these timing diagrams represents an on-level of the corresponding drive signal $S85_1$-$S85_4$. An on-level of the drive signal is a signal level at which the corresponding switch is switched on. The drive signals $S85_1$-$S85_4$ may, for example, be generated dependent on the output voltage v80 of the buck converter 80, where, according to one embodiment, drive circuit 88 changes the switching state of the switches each time the output voltage v80 has decreased to 0. "Changing the switching state" means either switching the first and the fourth switches $85_1$, $85_4$ on and the other two switches off, or means switching the second and the third switch $85_2$, $85_3$ on and the other two switches off.

The buck converter 8 may have a conventional buck converter topology and may include a switch 83 connected in series with an inductive storage element 84, where the series circuit is connected between the first input terminal 21 of the converter unit 2 or the first output terminal 61 of a DC/DC converter, respectively. A rectifier element 86 is connected between the second output terminal 82 and the buck converter and a circuit node common to the switch 83 and the inductive storage element 84. The switch 83 can be implemented as a conventional electronic switch, such as a MOSFET or an IGBT. The rectifier element 86 can be implemented as a diode or as a synchronous rectifier. Further, a capacitive storage element 85, such as a capacitor, is connected between the input terminals of the buck converter 80, and a smoothing capacitor 89 is connected between the output terminals 81, 82.

The switch 83 of the buck converter 80 is driven by a PWM drive signal S83 generated by a control circuit or controller 87. The controller 87 of the buck converter 80 receives the reference signal $S_{REF}$ from the controller 5 of the converter unit 2. The controller 87 of the buck converter 80 is configured to generate its output current i80 in correspondence with the reference signal $S_{REF}$. This reference signal $S_{REF}$ according to Figure 14, unlike the reference signal $S_{REF}$ of Figure 9, does not have the waveform of the output current i1, but has the waveform of the rectified output current i1. This reference signal $S_{REF}$ is also generated from the output voltage signal $S_{v2}$ and the output current signal $S_{i1}$.

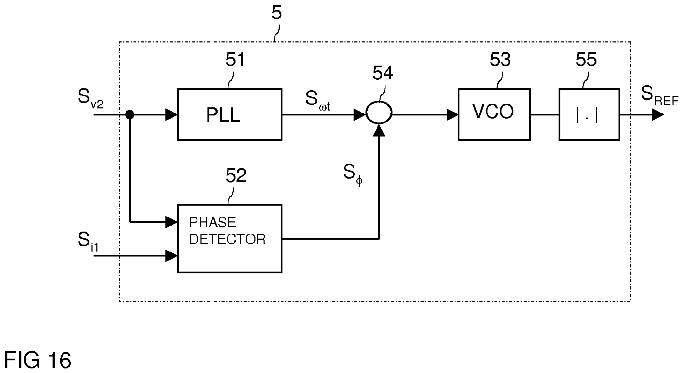

The controller 5 for generating the reference signal $S_{REF}$ according to Figure 14 may correspond to the controllers illustrated in Figures 6 and 13 with the difference that the oscillating signal provided at the output of the oscillator 53 is rectified. An embodiment of the controller 5 according to Figure 14 is illustrated in Figure 16. This controller 5 corresponds to the controller according to Figure 6 with the difference that the output signal of the oscillator 53 is received by a rectifier 55 that generates a rectified version of the oscillating output signal of the oscillator 53. Mathematically this is equivalent to forming the absolute value of the oscillating output signal of the oscillator 53. The reference signal $S_{REF}$ is available at the output of the rectifier 53.

When using a controller according to Figure 13, the input voltage signal $S_{V6}$ is to be replaced by a signal representing the input voltage V3 and the input voltage reference signal $S_{V6-REF}$ is to be replaced by signal representing a set value of the input voltage V3. Further, a rectified version of the VCO output signal is provided to the multiplier 56.

Referring to Figure 14, the controller 87 of the buck converters 80 can be implemented like a conventional controller for providing a PWM drive signal in a buck converter. The controller 86 receives the reference signal $S_{REF}$ and an output current signal $S_{i80}$, where the output current signal $S_{i80}$ represents the output current vi80 of the buck converter 80. The controller 86 is configured to vary the duty cycle of the drive signal S83 such that the output current i80 of the buck converter 80 is in correspondence with the reference signal $S_{REF}$. The functionality of this controller 86 corresponds to the functionality of the controller 67 illustrated in Figure 11. In the embodiment illustrated in Figure 14 the controller receives the output current signal $S_{i1}$ representing the output current i1 and the output voltage signal $S_{v2}$ for generating the reference signal $S_{REF}$. However, this is only an example. It would also be possible to generate the reference signal $S_{REF}$ based on signals representing the output voltage v80 and the output current i80 of the buck converter 80. In this case, the reference signal is generated such that output current i80 and the output voltage v80 of the buck converter 80 have a given phase difference.

The operating principle of a converter including DC/AC converter as illustrated in Figure 14 will now be explained with reference to Figures 1 and 14. The explanation will be based on the assumption that the voltage of the power grid 100 is a sinusoidal voltage so that an output current i1 with a sinusoidal waveform is desired. Further, it is assumed that the input powers of the individual DC/AC converters is zero, while the power grid voltage $v_N$ is applied to the input terminals 11, 12 and the bridge circuits 85 in the individual converter units are in operation. In this case, the smoothing capacitors 89 of the buck converters are connected in series between the output terminals 11, 12. When the individual capacitors 89 have the same size, the voltage across each of these capacitors 89 is 1/n times the power grid voltage $v_N$.

Assume now that the DC/AC converters receives an input power from the PV modules connected thereto. The DC/AC converters then adjust their common output current i1 to be in phase with the output voltages v2. The amplitude of the output current i1 is, in particular, controlled through the input voltage V3, where the current is increased when the voltage V3 increases, and the current is decreased when the voltage V3 decreases.

When the current i80 provided by one DC/AC converter decreases, a current that corresponds to a difference between the output current i80 and the common current i1 is provided by the smoothing capacitor 89 which causes the voltage v80 across the smoothing capacitor to decrease until the input power provided to the DC/AC converter corresponds to its output power. A decrease of the voltage across the smoothing capacitor 89 of one DC/AC converter causes an increase of the voltages across the smoothing capacitors of the other converters. This process proceeds until the converter has settled in stable operation point. When the current i80 provided by one DC/AC converter increases so as to be higher than the common current i1, the corresponding smoothing capacitor 89 is charged which results in a increase of the voltage across the smoothing capacitor 89 of the one converter and a decrease of the voltage across the smoothing capacitors of the other converters.

It became obvious from the explanation provided before that besides the control loops in the individual converter units 2 no additional control loop is required in order to control the output voltages of the individual converter units 2. The power converter circuit 1 with the converter units 2 is "self organizing". Assume that, for example, in the steady state the input power provided by one of the DC sources would drop, for example because the corresponding PV array is shaded. The output voltage v2 of the corresponding converter unit 2 would then drop, while the output voltages of the other converter units would increase in order to meet the condition defined by equation (1). The output current i1 would, at first, remain unchanged. However, the reactive power provided by the power converter circuit 1 would increase, which means, that the individual output voltages v2 of the converter units are no longer in phase with the output current i1. The individual output voltage v2 will then be controlled by the internal control loops in the individual converter units 2 to be in phase with the output current i1 again. This will result in a decrease of the output current i1. Equivalently, the output current i1 would increase, when the power provided by one or several DC of the power sources 1 would increase.

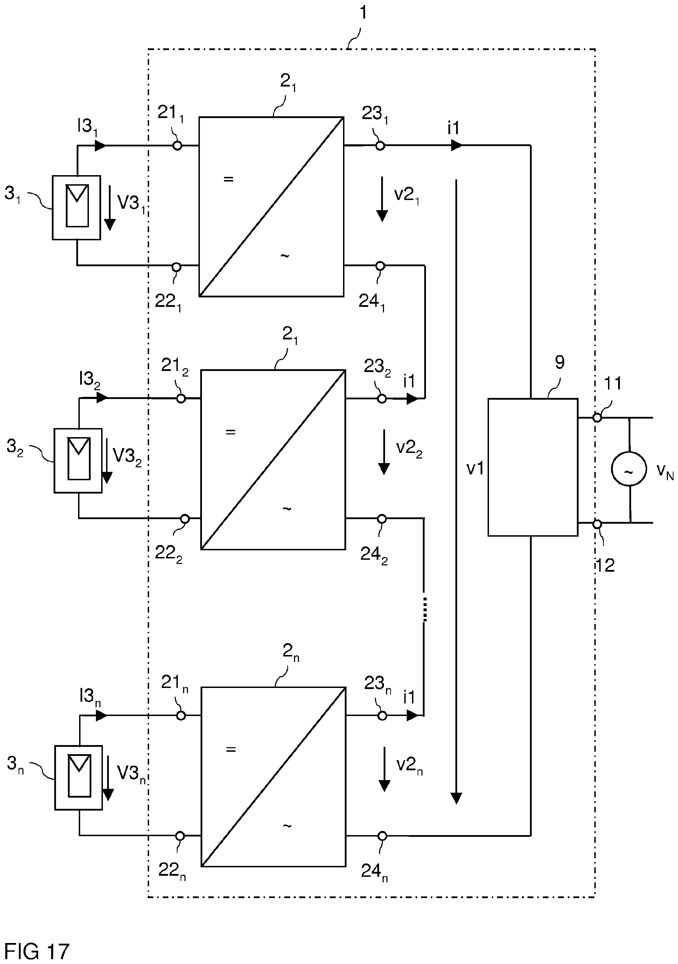

Figure 17 illustrates a further embodiment of a power converter circuit 1. In this power converter circuit 1 a connection circuit 9 is connected between the series circuit with the individual converter units 2 and the output terminals 11, 12 of the power converter circuit 1. This connection circuit 9 is configured to connect the power converter circuit 1 to the power grid whenever the power converter circuit 1 receives an overall input power from the individual DC power sources 3 that is sufficient for the power converter circuit 1 to generate an AC output voltage v1 that equals the power grid supply voltage $v_N$. Further, the connection circuit 9 is configured to disconnect the power converter circuit 1 from the power grid when the input power received by the power converter circuit 1 is to low in order to generate an output voltage v1 corresponding to the power grid supply voltage $v_N$.

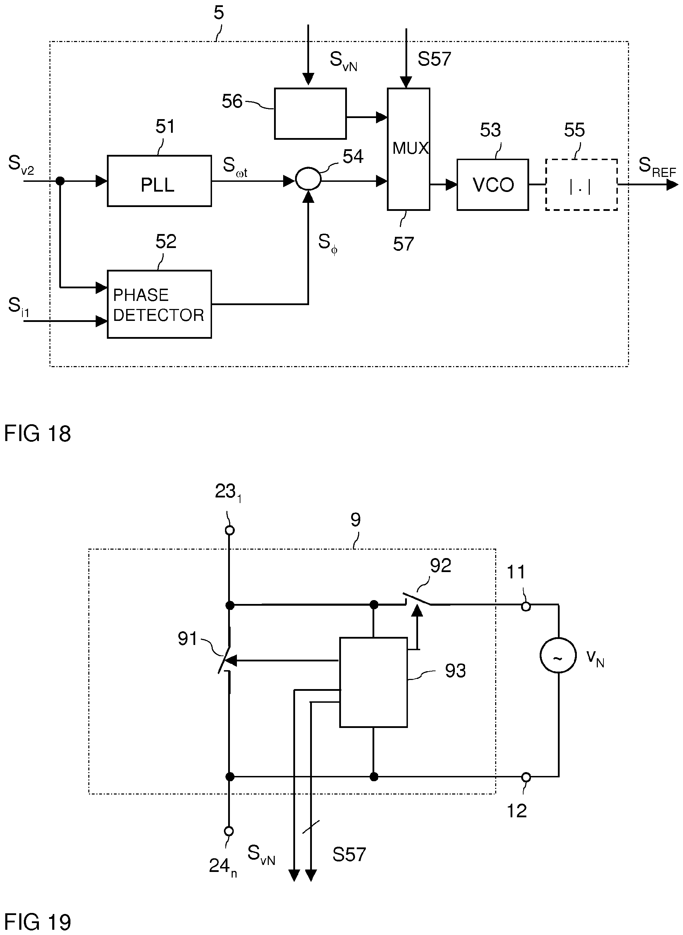

Further, the connection circuit 9 can be configured to support the power converter circuit 1 during start-up. "Start-up" is an operation phase of the power converter circuit 1 in which the output voltage v1 of the power converter circuit 1 increases from zero to the power grid supply voltage $v_N$, where the connection circuit 9 is configured to connect the power converter circuit 1 to the power grid when the output voltage v1 has increased to the power grid supply voltage $v_N$. During start-up the output current i1 is zero, so that the output voltages v2 of the individual converter units 2 cannot be synchronized to the output current i1. During start-up the reference signal $S_{REF}$ (see Figures 9 and 13) that governs generation of the output voltages v2 is generated from the power grid supply voltage $v_N$. This will be explained with reference to Figures 18 and 19.

Figure 18 illustrates an embodiment of a controller 5 that is configured to receive a signal $S_{vN}$ that is dependent on the power grid supply voltage $v_N$ and to generate the reference signal $S_{REF}$ dependent on this supply voltage signal $S_{vN}$ during start-up. Figure 18 illustrates an embodiment of the connection circuit 9 in detail.

The controller according to Figure 18 is based on the controllers according to Figures 6 and 15. The controller according to Figure 17 additionally includes a multiplexer 57 that receives the frequency and phase signal from the operator 54 at a first input and that receives the supply voltage signal $S_{vN}$ at a second input. The supply voltage signal $S_{vN}$ represents the frequency and phase of the power grid supply voltage $v_N$ and may be stored in a memory 56. An output of the multiplexer is coupled to the oscillator 53. In normal operation of the power converter circuit 1 the multiplexer 57 passes the frequency and phase signal from the operator 54 to the oscillator 53. During start-up oscillator 53 receives the supply voltage signal $S_{vN}$.

Referring to Figure 19, the connection circuit 9 includes a control circuit 93 that is configured to measure the power supply voltage $v_N$ and to provide the power supply voltage signal $S_{vN}$ to the converter units 2. The control circuit 93 is further configured to provide at least one control signal S57 for the controllers 5 in the individual converter units 2. Additionally, the connection circuit 9 includes a first switch 91 that is connected to short-circuit the series circuit with the individual converter units. For this, the first switch 91 is connected between the first input terminal $23_1$ of the first converter unit $2_1$ (see Figure 1) and the second output terminal $24_n$ of the last converter unit $2_n$ (see Figure 1) in the series circuit. Further, a second switch 92 is connected between the series circuit with the individual converter unit 2 and the output terminals 11, 12. These switches 91, 92 are controlled by the control circuit 93, where only one of these switches is switched on at once. When the power converter circuit 1 is not in operation, the first switch 91 is switched on and the second switch 92 is switched off. During start-up both switches 91, 92 are switched off. In normal operation, the second switch 92 is switched on in order to connect the power converter circuit 1 to the power grid.

The operating principle of the connection circuit 9 during start-up will briefly be explained. In a first step, the control circuit 93 generates the supply voltage signal $S_{vN}$ by evaluating the supply voltage $v_N$. The supply voltage signal $S_{vN}$ is a signal representing frequency in phase of the supply voltage $v_N$. This supply voltage signal $S_{vN}$ is provided to the individual controllers 5 of the converter units 2.

In next method steps the controllers 5 use the supply voltage signal $S_{vN}$ to generate the output voltages v2, where amplitudes these output voltages v2 may gradually increase. The control circuit 93 measures the output voltage v1 and connects the power converter circuit 1 to the power grid by closing switch 92 when the output voltage v1 reaches the supply voltage $v_N$. By generating the output voltages v2 using the supply voltage signal $S_{vN}$ during start-up the output voltages v2 of the converter units 2 and, therefore, the output voltage v1 of the power converter circuit 1 is in phase with the power grid supply voltage $v_N$.

When the power converter circuit 1 is deactived and the first switch 91 is closed, the control circuit 93 may evaluate a current through a first switch 91. A current may flow through the switch 91 when the DC sources 3 provides an input power to the DC/AC converter. When a current through switch 91 is detected, the control circuit 93 may begin a start-up procedure.

When the converter is, for example, implemented with a DC/AC converter as illustrated in Figure 14 and as explained with reference to Figure 14, the start-up phase does not require to store a representation of the power grid voltage $v_N$ in the control circuit 5. In this case, the power grid voltage $v_N$ is simply applied to the input terminals 11, 12 and, therefore, to the smoothing capacitors 89 of the individual DC/AC converters 4, where the voltages across these capacitors form the basis for controlling the output currents i80 of the individual DC/AC converters 4.

Although various exemplary embodiments of the invention have been disclosed, it will be apparent to those skilled in the art that various changes and modifications can be made which will achieve some of the advantages of the invention without departing from the spirit and scope of the invention. It will be obvious to those reasonably skilled in the art that other components performing the same functions may be suitably substituted. It should be mentioned that features explained with reference to a specific figure may be combined with features of other figures, even in those cases in which this has not explicitly been mentioned. Further, the methods of the invention may be achieved in either all software implementations, using the appropriate processor instructions, or in hybrid implementations that utilize a combination of hardware logic and software logic to achieve the same results. Such modifications to the inventive concept are intended to be covered by the appended claims.

Spatially relative terms such as "under", "below", "lower", "over", "upper" and the like, are used for ease of description to explain the positioning of one element relative to a second element. These terms are intended to encompass different orientations of the device in addition to different orientations than those depicted in the figures. Further, terms such as "first", "second", and the like, are also used to describe various elements, regions, sections, etc. and are also not intended to be limiting. Like terms refer to like elements throughout the description.

As used herein, the terms "having", "containing", "including", "comprising" and the like are open ended terms that indicate the presence of stated elements or features, but do not preclude additional elements or features. The articles "a", "an" and "the" are intended to include the plural as well as the singular, unless the context clearly indicates otherwise.

It is to be understood that the features of the various embodiments described herein may be combined with each other, unless specifically noted otherwise. Although specific embodiments have been illustrated and described herein, it will be appreciated by those of ordinary skill in the art that a variety of alternate and/or equivalent implementations may be substituted for the specific embodiments shown and described without departing from the scope of the present invention. This application is intended to cover any adaptations or variations of the specific embodiments discussed herein. Therefore, it is intended that this invention be limited only by the appended claims.

**Claims**

1.  A power converter circuit (1), comprising:

    output terminals (11, 12) configured to receive a grid voltage ($v_N$) from a power grid (100);
    a plurality of transformerless converter units (2) each comprising input terminals (21, 22) configured to be coupled to a respective one of a plurality of DC power sources ($3_1$-$3_n$), and output terminals (23, 24) for providing an AC output current (i1), the plurality of converter units (2) being connected in series between the output terminals (11, 12) of the power converter circuit (1) so that an AC output voltage (v2) at the output terminals (23, 24) of each of the plurality of converter units (2) is a portion of the grid voltage ($v_N$), and
    wherein each of the plurality of converter units (2) is configured to provide an AC output current (i1) at its output terminals (23, 24) and is configured to regulate a generation of this AC output current (i1) such that a phase difference between the AC output current (i1) and the AC output voltage (v2) assumes a given set value.

2.  The power converter circuit (1) of claim 1 wherein the set value is zero.

3.  The power converter circuit (1) of claim 1 or 2, wherein the at least one converter unit (2) comprises:

    a DC/AC converter (4) coupled between the input terminals (21, 22) and the output terminals (23, 24) and configured to generate the AC output current (i1) with a frequency and phase that is dependent on a first reference signal ($S_{REF}$);
    a control circuit (5) configured to generate the first reference signal ($S_{REF}$) dependent on the AC output voltage (v2) and the AC output current (i1).

4.  The power converter circuit (1) of claim 3, wherein the control circuit (5) comprises:

    a phase-locked loop (51) configured to generate a frequency information dependent on the AC output voltage (v2);
    a phase difference detector (52) configured to detect a phase difference between the AC output voltage (v2) and the AC output current (i1) and to provide a phase difference information;
    a signal generator (53) configured to generate the first reference signal ($S_{REF}$) dependent on the frequency information and the phase information.

5.  The power converter circuit (1) of claim 3 or 4, wherein the DC/AC converter (4) is configured to receive an input voltage (V3) and wherein the control circuit (5) is configured to generate the first reference signal ($S_{REF}$) dependent on the input voltage (v3).

6.  The power converter circuit (1) of one of claims 3 to 5, wherein the at least one converter unit (2) further comprises:

    a DC/DC converter (6) coupled between the input terminals (21, 22) and the DC/AC converter unit (4) and configured to adjust at least one of an input voltage (V3) between the input terminals and an input current (13) at the input terminals (21, 22) dependent on a second reference signal (SREF-V3);
    a reference signal source (7) configured to provide the second reference signal (SREF-V3).

7.  The power converter circuit (1) of claim 6, wherein the reference signal source (7) is implemented as a maximum power point tracker and is configured to generate the second reference signal (SREF-V3) dependent on the input voltage (V3) and the input current (13).

8.  The power converter circuit (1) of claim 6 or 7, wherein the DC/DC converter (6) is a boost converter.

9. The power converter circuit (1) of claim 6 or 7, wherein the DC/DC converter (6) is a buck converter.

10. The power converter circuit (1) of one of the preceding claims, further comprising:
a connection circuit (9) coupled between the series circuit with the power converter units (2) and the output terminals (11, 12) and configured to assume one of a first operation state in which the series circuit is connected to the output terminals (11. 12), and a second operation state in which the series circuit is disconnected from the output terminals (11, 12).

11. The power converter circuit (1) of claim 10, wherein the at least one converter unit (2) comprises:

a DC/AC converter (4) coupled between the input terminals (21, 22) and the output terminals (23, 24) and configured to generate the AC output voltage (v2) with a frequency and phase that is dependent on a first reference signal ($S_{REF}$);
a control circuit (5) configured to generate the first reference signal ($S_{REF}$) dependent on the AC output voltage (v2) and the AC output current (i1) when the connection circuit (9) is in the first operation state and dependent on a voltage ($v_N$) at the output terminals (11, 12) when the connection circuit (9) is in the second operation state.

12. The power converter (1) circuit of claim 1, wherein each of the plurality of converter units (2) comprises an internal control loop and is configured to regulate the generation of the respective AC output current (i1) only using the internal control loop.

13. A power supply system, comprising:

a power converter circuit (1) according to one of the preceding claims; and
a plurality of DC voltage sources ($3_1$-$3_n$), each DC voltage source ($3_1$-$3_n$) coupled to the input terminals (21, 22) of a respective one of the plurality of converter units (2).

14. The power supply system of claim 13, wherein each DC voltage source (3) comprises a photovoltaic array with at least one solar cell (31).

15. The power supply system of claim 13 wherein each DC voltage source (3) comprises a fuel cell.

16. The power supply system of one of claims 13 to 15 wherein the set value is zero.

17. The power supply system of one of claim 13 to 16, wherein the at least one converter unit (2) comprises:

a DC/AC converter (4) coupled between the input terminals (21, 22) and the output terminals (23, 24) and configured to generate the AC output current (i1) with a frequency and a phase that is dependent on a first reference signal ($S_{REF}$);
a control circuit (5) configured to generate the first reference signal ($S_{REF}$) dependent on the AC output voltage (v2) and the AC output current (i1).

18. A method for operating a power converter circuit (1), the power converter circuit (1) comprising:

output terminals (11, 12) configured to be coupled to a power grid (100) and receive a grid voltage ($v_N$) from the power grid (100), and
a plurality of transformerless converter units (2) each comprising input terminals (21, 22) configured to be coupled to a respective one of a plurality of DC power sources ($3_1$-$3_n$), and output terminals (23, 24) for providing an AC output current (i1), the plurality of converter units (2) being connected in series between the output terminals (11, 12) of the power converter circuit (1) so that an AC output voltage (v2) at the output terminals (23, 24) of each of the plurality of converter units (2) is a portion of the grid voltage ($v_N$),
the method comprising:
providing an AC output current (i1) by each of the plurality of converter units (2) and regulating a generation of the AC output current (i1) such that a phase difference between this AC output current (i1) and the AC output voltage (v2) assumes a given set value.

19. The method of claim 18 wherein the set value is zero.

20. The method of claim 18 or 19, wherein the at least one converter unit (2) further comprises:

a DC/AC converter (4) coupled between the input terminals (21, 22) and the output terminals (23, 24) and configured to generate the AC output voltage (v2) with a frequency and phase that is dependent on a first reference signal ($S_{REF}$);
a control circuit (5) configured to generate the first reference signal ($S_{REF}$) dependent on the AC output voltage (v2) and the AC output current (i1).

**Patentansprüche**

1. Leistungswandlerschaltung (1), die aufweist:

Ausgangsanschlüsse (11, 12), die dazu ausgebildet sind, eine Netzspannung ($v_N$) von einem Leistungsnetz (100) zu empfangen;
mehrere transformatorlose Wandlereinheiten (2), die jeweils Eingangsanschlüsse (21, 22), welche dazu ausgebildet sind, an eine jeweilige Gleichspannungsquelle von mehreren Gleichspannungsquellen ($3_1$-$3_n$) gekoppelt zu werden, und Ausgangsanschlüsse (23, 24) zur Bereitstellung eines Ausgangswechselstroms (i1) aufweisen, wobei die mehreren Wandlereinheiten (2) zwischen den Ausgangsanschlüssen (11, 12) der Leistungswandlerschaltung (1) in Reihe geschaltet sind, so dass eine Ausgangswechselspannung (v2) an den Ausgangsanschlüssen (23, 24) jeder Wandlereinheit der mehreren Wandlereinheiten (2) ein Teil der Netzspannung ($v_N$) ist, und
wobei jede Wandlereinheit der mehreren Wandlereinheiten (2) dazu ausgebildet ist, einen Ausgangswechselstrom (i1) an deren Ausgangsanschlüssen (23, 24) bereitzustellen, und dazu ausgebildet ist, eine Erzeugung dieses Ausgangswechselstroms (i1) so zu regeln, dass ein Phasenunterschied zwischen dem Ausgangswechselstrom (i1) und der Ausgangswechselspannung (v2) einen gegebenen, eingestellten Wert annimmt.

2. Leistungswandlerschaltung (1) gemäß Anspruch 1, bei der der eingestellte Wert gleich Null ist.

3. Leistungswandlerschaltung (1) gemäß Anspruch 1 oder 2, bei der die mindestens eine Wandlereinheit (2) aufweist:

einen DC/AC-Wandler (4), der zwischen die Eingangsanschlüsse (21, 22) und die Ausgangsanschlüsse (23, 24) gekoppelt und dazu ausgebildet ist, den Ausgangswechselstrom (i1) mit einer Frequenz und einer Phase, die von einem ersten Referenzsignal ($S_{REF}$) abhängig sind, zu erzeugen;
eine Steuerschaltung (5), die dazu ausgebildet ist, das erste Referenzsignal ($S_{REF}$) abhängig von der Ausgangswechselspannung (v2) und dem Ausgangswechselstrom (i1) zu generieren.

4. Leistungswandlerschaltung (1) gemäß Anspruch 3, bei der die Steuerschaltung (5) aufweist:

eine Phasenregelschleife (51), die dazu ausgebildet ist, eine Frequenzinformation zu generieren;
einen Phasenunterschiedsdetektor (52), der dazu ausgebildet ist, einen Phasenunterschied zwischen der Ausgangswechselspannung (v2) und dem Ausgangswechselstrom (i1) zu detektieren und eine Phasenunterschiedsinformation bereitzustellen;
einen Signalgenerator (53), der dazu ausgebildet ist, das erste Referenzsignal ($S_{REF}$) abhängig von der Frequenzinformation und der Phaseninformationen zu generieren.

5. Leistungswandlerschaltung (1) gemäß Anspruch 3 oder 4, bei der der DC/AC Wandler (4) dazu ausgebildet ist, eine Eingangsspannung (V3) zu empfangen, und bei der die Steuerschaltung (5) dazu ausgebildet ist, das erste Referenzsignal ($S_{REF}$) abhängig von der Eingangsspannung (v3) zu generieren.

6. Leistungswandlerschaltung (1) gemäß einem der Ansprüche 3 bis 5, bei der die mindestens eine Wandlereinheit (2) weiterhin aufweist:

einen DC/DC-Wandler (6), der zwischen die Eingangsanschlüsse (21, 22) und die DC/AC-Wandlereinheit (4) gekoppelt und dazu ausgebildet ist, eine Eingangsspannung (V3) zwischen den Eingangsanschlüssen und/oder einen Eingangsstrom (I3) an den Eingangsanschlüssen (23, 24) abhängig von einem zweiten Referenzsignal ($S_{REF-V3}$) einzustellen;
eine Referenzsignalquelle (7), die dazu ausgebildet ist, das zweite Referenzsignal ($S_{REF-V3}$) bereitzustellen.

7. Leistungswandlerschaltung (1) gemäß Anspruch 6, bei der die Referenzsignalquelle (7) als ein Maximum-Power-Point-Tracker ausgeführt und dazu ausgebildet ist, das zweite Referenzsignal ($S_{REF-V3}$) abhängig von der Eingangsspannung (V3) und dem Eingangsstrom (I3) zu generieren.

8. Leistungswandlerschaltung (1) gemäß Anspruch 6 oder 7, bei der der DC/DC-Wandler (6) ein Hochsetzsteller ist.

9. Leistungswandlerschaltung (1) gemäß Anspruch 6 oder 7, bei der der DC/DC Wandler (6) ein Tiefsetzsteller ist.

10. Leistungswandlerschaltung (1) gemäß einem der vorherigen Ansprüche, die weiterhin aufweist:
eine Verbindungsschaltung (9), die zwischen die Reihenschaltung mit den Leistungswandlereinheiten (2) und die Ausgangsanschlüsse (11, 12) gekoppelt und dazu ausgebildet ist, einen ersten Betriebszustand, in dem die Reihenschaltung an die Ausgangsanschlüsse (11, 12) angeschlossen ist, oder einen zweiten Betriebszustand, in dem die Reihenschaltung von den Ausgangsanschlüssen (11, 12) getrennt ist, anzunehmen.

11. Leistungswandlerschaltung (1) gemäß Anspruch 10, bei der die mindestens eine Wandlereinheit (2) aufweist:

   einen DC/AC-Wandler (4), der zwischen die Eingangsanschlüsse (21, 22) und die Ausgangsanschlüsse (23, 24) gekoppelt und dazu ausgebildet ist, die Ausgangswechselspannung (v2) mit einer Frequenz und einer Phase, die von einem ersten Referenzsignal ($S_{REF}$) abhängig sind, zu erzeugen;
   eine Steuerschaltung (5), die dazu ausgebildet ist, das erste Referenzsignal ($S_{REF}$) abhängig von der Ausgangswechselspannung (v2) und dem Ausgangswechselstrom (i1) zu generieren, wenn sich die Verbindungsschaltung (9) in dem ersten Betriebszustand befindet, und abhängig von einer Spannung ($v_N$) an den Ausgangsanschlüssen (11, 12) zu generieren, wenn sich die Verbindungsschaltung (9) in dem zweiten Betriebszustand befindet.

12. Leistungswandlerschaltung (1) gemäß Anspruch 1, bei der jede Wandlereinheit der mehreren Wandlereinheiten (2) einen internen Regelkreis aufweist und dazu ausgebildet ist, die Erzeugung des jeweiligen Ausgangswechselstroms (i1) lediglich unter Verwendung des internen Regelkreises zu regeln.

13. Leistungsversorgungssystem, das aufweist:

   eine Leistungswandlerschaltung (1) gemäß einem der vorherigen Ansprüche; und
   mehrere Gleichspannungsquellen ($3_1$-$3_n$), wobei jede Gleichspannungsquelle ($3_1$-$3_n$) an die Eingangseinschlüsse (21, 22) einer jeweiligen Wandlereinheit der mehreren Wandlereinheiten (2) gekoppelt ist.

14. Leistungsversorgungssystem gemäß Anspruch 13, bei der jede Gleichspannungsquelle (3) eine Photovoltaikanlage mit mindestens einer Solarzelle (31) aufweist.

15. Leistungsversorgungssystem gemäß Anspruch 13, bei der jede Gleichspannungsquelle (3) eine Brennstoffzelle aufweist.

16. Leistungsversorgungssystem gemäß einem der Ansprüche 13 bis 15, bei der der eingestellte Wert gleich Null ist.

17. Leistungsversorgungssystem gemäß einem der Ansprüche 13 bis 16, bei der die mindestens eine Wandlereinheit (2) aufweist:

   einen DC/AC-Wandler (4), der zwischen die Eingangsanschlüsse (21, 22) und die Ausgangsanschlüsse (23, 24) gekoppelt und dazu ausgebildet ist, den Ausgangswechselstrom (i1) mit einer Frequenz und einer Phase, die von einem ersten Referenzsignal ($S_{REF}$) abhängig sind, zu erzeugen;
   eine Steuerschaltung (5), die dazu ausgebildet ist, das erste Referenzsignal ($S_{REF}$) abhängig von der Ausgangswechselspannung (v2) und dem Ausgangswechselstrom (i1) zu generieren.

18. Verfahren zum Betreiben einer Leistungswandlerschaltung (1), bei dem die Leistungswandlerschaltung (1) aufweist:

   Ausgangsanschlüsse (11, 12), die dazu ausgebildet sind, an einen Leistungsnetz (100) gekoppelt zu werden und eine Netzspannung ($v_N$) von dem Leistungsnetz (100) zu erhalten, und
   mehrere transformatorlose Wandlereinheiten (2), die jeweils Eingangsanschlüsse (21, 22), welche dazu ausgebildet sind, an eine jeweilige Gleichspannungsquelle von mehreren Gleichspannungsquellen ($3_1$-$3_n$) gekop-

pelt zu werden, und Ausgangsanschlüsse (23, 24) zur Bereitstellung eines Ausgangswechselstroms (i1) aufweisen, wobei die mehreren Wandlereinheiten (2) zwischen den Ausgangsanschlüssen (11, 12) der Leistungswandlerschaltung (1) in Reihe geschaltet sind, so dass eine Ausgangswechselspannung (v2) an den Ausgangsanschlüssen (23, 24) jeder Wandlereinheit der mehreren Wandlereinheiten (2) ein Teil der Netzspannung ($v_N$) ist, wobei das Verfahren aufweist:

Bereitstellen eines Ausgangswechselstroms (i1) durch jede Wandlereinheit der mehreren Wandlereinheiten (2) und Regeln der Erzeugung des Ausgangswechselstroms (i1) so dass ein Phasenunterschied zwischen diesem Ausgangswechselstrom (i1) und der Ausgangswechselspannung (v2) einen gegebenen, eingestellten Wert annimmt.

**19.** Verfahren gemäß Anspruch 18, bei dem der eingestellte Wert gleich Null ist.

**20.** Verfahren gemäß Anspruch 18 oder 19, bei dem die mindestens eine Wandlereinheit (2) weiterhin aufweist:

einen DC/AC-Wandler (4), der zwischen die Eingangsanschlüsse (21, 22) und die Ausgangsanschlüsse (23, 24) gekoppelt und dazu ausgebildet ist, die Ausgangswechselspannung (v2) mit einer Frequenz und einer Phase, die von einem ersten Referenzsignal ($S_{REF}$) abhängig sind, zu erzeugen;
eine Steuerschaltung (5), die dazu ausgebildet ist, das erste Referenzsignal ($S_{REF}$) abhängig von der Ausgangswechselspannung (v2) und dem Ausgangswechselstrom (i1) zu generieren.

## Revendications

**1.** Circuit convertisseur de puissance (1), comprenant :

des bornes de sortie (11, 12) configurées pour recevoir une tension de réseau ($v_N$) de la part d'un réseau de puissance (100) ;
une pluralité d'unités de convertisseur (2) sans transformateur, chacune comprenant des bornes d'entrée (21, 22) configurées pour être couplées à une source respective d'une pluralité de sources de courant continu ($3_1$-$3_n$), et des bornes de sortie (23, 24) destinées à fournir un courant de sortie alternatif (i1), la pluralité d'unités de convertisseur (2) étant montée en série entre les bornes de sortie (11, 12) du circuit convertisseur de puissance (1) de manière à ce qu'une tension de sortie alternative (v2) aux bornes de sortie (23, 24) de chacune des unités de la pluralité d'unités de convertisseur (2) soit une partie de la tension de réseau ($v_N$), et
dans lequel chacune des unités de la pluralité d'unités de convertisseur (2) est configurée pour fournir un courant de sortie alternatif (i1) à ses bornes de sortie (23, 24) et est configurée pour réguler la génération de ce courant de sortie alternatif (i1) si bien qu'une différence de phase entre le courant de sortie alternatif (i1) et la tension de sortie alternative (v2) prend une valeur définie donnée.

**2.** Circuit convertisseur de puissance (1) selon la revendication 1 dans lequel la valeur définie est égale à zéro.

**3.** Circuit convertisseur de puissance (1) selon l'une des revendications 1 ou 2, dans lequel la ou les unités de convertisseur (2) comprennent :

un convertisseur DC/AC (4) couplé entre les bornes d'entrée (21, 22) et les bornes de sortie (23, 24) et configuré pour générer un courant de sortie alternatif (i1) ayant une fréquence et une phase qui dépendent d'un premier signal de référence ($V_{REF}$) ;
un circuit de commande (5) configuré pour générer le premier signal de référence ($V_{REF}$) en fonction de la tension de sortie alternative (v2) et du courant de sortie alternatif (i1).

**4.** Circuit convertisseur de puissance (1) selon la revendication 3, dans lequel le circuit de commande (5) comprend :

une boucle à verrouillage de phase (51) configurée pour générer des informations sur la fréquence en fonction de la tension de sortie alternative (v2) ;
un détecteur de différence de phase (52) configuré pour détecter une différence de phase entre la tension de sortie alternative (v2) et le courant de sortie alternatif (i1) et pour fournir des informations sur la différence de phase ;
un générateur de signal (53) configuré pour générer le premier signal de référence ($S_{REF}$) en fonction des informations sur la fréquence et des informations sur la phase.

**5.** Circuit convertisseur de puissance (1) selon l'une des revendications 3 ou 4, dans lequel le convertisseur DC/AC (4) est configuré pour recevoir une tension d'entrée (v3) et dans lequel le circuit de commande (5) est configuré pour générer le premier signal de référence ($S_{REF}$) en fonction de la tension d'entrée (v3).

**6.** Circuit convertisseur de puissance (1) selon l'une des revendications 3 à 5, dans lequel la ou les unités de convertisseur (2) comprennent en outre :

un convertisseur DC/DC (6) couplé entre les bornes d'entrée (21, 22) et l'unité de convertisseur DC/AC (4) et configuré pour ajuster la tension d'entrée (V3) entre les bornes d'entrée et/ou le courant d'entrée (I3) aux bornes d'entrée (21, 22) en fonction d'un second signal de référence ($S_{REF-V3}$) ;
une source de signal de référence (7) configurée pour fournir le second signal de référence ($S_{REF-V3}$).

**7.** Circuit convertisseur de puissance (1) selon la revendication 6, dans lequel la source de signal de référence (7) est mise en oeuvre sous la forme d'un dispositif de poursuite du point de puissance maximale et est configurée pour générer le second signal de référence ($S_{REF-V3}$) en fonction de la tension d'entrée (V3) et du courant d'entrée (I3).

**8.** Circuit convertisseur de puissance (1) selon l'une des revendications 6 ou 7, dans lequel le convertisseur DC/DC (6) est un convertisseur élévateur.

**9.** Circuit convertisseur de puissance (1) selon l'une des revendications 6 ou 7, dans lequel le convertisseur DC/DC (6) est un convertisseur Buck.

**10.** Circuit convertisseur de puissance (1) selon l'une des revendications précédentes, comprenant en outre :
un circuit de raccordement (9) couplé entre le circuit série avec les unités de convertisseur de puissance (2) et les bornes de sortie (11, 12) et configuré pour se mettre dans un premier état de fonctionnement dans lequel le circuit série est relié aux bornes de sortie (11, 12) ou dans un second état de fonctionnement dans lequel le circuit série est séparé des bornes de sortie (11, 12).

**11.** Circuit convertisseur de puissance (1) selon la revendication 10, dans lequel la ou les unités convertisseur (2) comprennent :

un convertisseur DC/AC (4) couplé entre les bornes d'entrée (21, 22) et les bornes de sortie (23, 24) et configuré pour générer une tension de sortie alternative (v2) ayant une fréquence et une phase qui dépendent d'un premier signal de référence ($V_{REF}$) ;
un circuit de commande (5) configuré pour générer le premier signal de référence ($V_{REF}$) en fonction de la tension de sortie alternative (v2) et du courant de sortie alternatif (i1) quand le circuit de raccordement (9) se trouve dans le premier état de fonctionnement et en fonction d'une tension ($v_N$) aux bornes de sortie (11, 12) quand le circuit de raccordement (9) se trouve dans le second état de fonctionnement.

**12.** Circuit convertisseur de puissance (1) selon la revendication 1, dans lequel la ou les unités convertisseur (2) comprennent une boucle de commande interne et sont configurées pour réguler la génération du courant de sortie alternatif (i1) respectif en utilisant uniquement la boucle de commande interne.

**13.** Système d'alimentation électrique, comprenant :

un circuit convertisseur de puissance (1) selon l'une des revendications précédentes ; et
une pluralité de sources de tension continue ($3_1$-$3_n$), chaque source de tension continue ($3_1$-$3_n$) étant couplée aux bornes d'entrée (21, 22) d'une unité respective de la pluralité d'unités de convertisseur (2).

**14.** Système d'alimentation électrique selon la revendication 13, dans lequel chaque source de tension continue (3) comprend un groupe photovoltaïque avec au moins une cellule solaire (31).

**15.** Système d'alimentation électrique selon la revendication 13, dans lequel chaque source de tension continue (3) comprend une pile à combustible.

**16.** Système d'alimentation électrique selon l'une des revendications 13 à 15, dans lequel la valeur définie est égale à zéro.

**17.** Système d'alimentation électrique selon l'une des revendications 13 à 16, dans lequel la ou les unités de convertisseur (2) comprennent :

un convertisseur DC/AC (4) couplé entre les bornes d'entrée (21, 22) et les bornes de sortie (23, 24) et configuré pour générer un courant de sortie alternatif (i1) ayant une fréquence et une phase qui dépendent d'un premier signal de référence ($V_{REF}$) ;
un circuit de commande (5) configuré pour générer le premier signal de référence ($V_{REF}$) en fonction de la tension de sortie alternative (v2) et du courant de sortie alternatif (i1).

**18.** Procédé destiné à faire fonctionner un circuit convertisseur de puissance (1), le circuit convertisseur de puissance (1) comprenant :

des bornes de sortie (11, 12) configurées pour être couplées à un réseau de puissance (100) et pour recevoir une tension de réseau ($v_N$) de la part du réseau de puissance (100), et
une pluralité d'unités de convertisseur (2) sans transformateur, chacune comprenant des bornes d'entrée (21, 22) configurées pour être couplées à une source respective d'une pluralité de sources de courant continu ($3_1$-$3_n$), et des bornes de sortie (23, 24) destinées à fournir un courant de sortie alternatif (i1), la pluralité d'unités de convertisseur (2) étant montée en série entre les bornes de sortie (11, 12) du circuit convertisseur de puissance (1) de manière à ce qu'une tension de sortie alternative (v2) aux bornes de sortie (23, 24) de chacune des unités de la pluralité d'unités de convertisseur (2) soit une partie de la tension de réseau ($v_N$),
le procédé comprenant :
le fait de fournir un courant de sortie alternatif (i1) par chacune des unités de la pluralité d'unités de convertisseur (2) et la régulation de la génération du courant de sortie alternatif (i1) de manière à ce qu'une différence de phase entre ce courant de sortie alternatif (i1) et la tension de sortie alternative (v2) prenne une valeur définie donnée.

**19.** Procédé selon la revendication 18 dans lequel la valeur définie est égale à zéro.

**20.** Procédé selon l'une des revendications 18 ou 19, dans lequel la ou les unités de convertisseur (2) comprennent en outre :

un convertisseur DC/AC (4) couplé entre les bornes d'entrée (21, 22) et les bornes de sortie (23, 24) et configuré pour générer la tension de sortie alternative (v2) avec une fréquence et une phase qui dépendent d'un premier signal de référence ($V_{REF}$) ;
un circuit de commande (5) configuré pour générer le premier signal de référence ($V_{REF}$) en fonction de la tension de sortie alternative (v2) et du courant de sortie alternatif (i1).

FIG 1

FIG 2A

FIG 2B

FIG 2C

FIG 3

FIG 4

FIG 5A

FIG 5B

5

51

$S_{v2}$ → PLL → $S_{\omega t}$ → 54 → VCO → $S_{REF}$

53

$S_\phi$

52

$S_{i1}$ → PHASE DETECTOR

FIG 6

51

512 513 514 515

$S_{v2}$ → x → LPF → PID → 1/s → $S_{\omega t}$

511

VCO

FIG 7

52

521 522

$S_{v2}$ → REACTIVE POWER DETECTOR → $S_{RP}$ → FILTER → $S_\phi$

$S_{i1}$ →

FIG 8

FIG 9

FIG 10

67

FIG 11

FIG 12

FIG 13

FIG 14

FIG 15

5

51

$S_{v2}$ → PLL → $S_{\omega t}$ → 54 → VCO → | · | → $S_{REF}$

53 55

52

$S_\phi$

$S_{i1}$ → PHASE DETECTOR

FIG 16

FIG 17

FIG 18

FIG 19

**REFERENCES CITED IN THE DESCRIPTION**

**Patent documents cited in the description**

- CN 102035416 A

**Non-patent literature cited in the description**

- **ALONSO O. et al.** Cascaded h-bridge multilevel converter for grid connected photovoltaic generators with independent maximum power point tracking of each solar array. *PESC'03.*, 2003, ISBN 978-0-7803-7754-7, 731-735